(19) Europäisches Patentamt
European Patent Office
Office européen des brevets

(11) EP 3 272 814 B1

(12) EUROPEAN PATENT SPECIFICATION

(45) Date of publication and mention of the grant of the patent:
**23.02.2022 Bulletin 2022/08**

(21) Application number: **16764930.0**

(22) Date of filing: **14.03.2016**

(51) International Patent Classification (IPC):
***C09B 57/00*** *(2006.01)* ***C09B 21/00*** *(2006.01)*
***C09B 19/00*** *(2006.01)* ***C09B 23/14*** *(2006.01)*
***H01G 9/20*** *(2006.01)* ***C09B 15/00*** *(2006.01)*

(52) Cooperative Patent Classification (CPC):
**C09B 15/00; C09B 19/00; C09B 21/00; C09B 23/14; C09B 23/145; C09B 57/008; H01G 9/20;** Y02E 10/542

(86) International application number:
**PCT/JP2016/057953**

(87) International publication number:
**WO 2016/148100 (22.09.2016 Gazette 2016/38)**

# (54) RUTHENIUM COMPLEX DYE, DYE SOLUTION, PHOTOELECTRIC CONVERSION ELEMENT, AND DYE-SENSITIZED SOLAR CELL

RUTHENIUMKOMPLEXFARBSTOFF, FARBSTOFFLÖSUNG, ELEMENT ZUR PHOTOELEKTRISCHEN UMWANDLUNG UND FARBSTOFFSENSIBILISIERTE SOLARZELLE

COLORANT COMPLEXE DE RUTHÉNIUM, SOLUTION DE COLORANT, ÉLÉMENT DE CONVERSION PHOTOÉLECTRIQUE ET CELLULE SOLAIRE À COLORANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2015 JP 2015054036**
**11.06.2015 JP 2015118147**

(43) Date of publication of application:
**24.01.2018 Bulletin 2018/04**

(73) Proprietor: **FUJIFILM Corporation**
**Tokyo 106-8620 (JP)**

(72) Inventors:
- **HANAKI, Naoyuki**
  **Ashigarakami-gun**
  **Kanagawa 258-8577 (JP)**
- **TANI, Yukio**
  **Ashigarakami-gun**
  **Kanagawa 258-8577 (JP)**
- **WATANABE, Kousuke**
  **Ashigarakami-gun**
  **Kanagawa 258-8577 (JP)**
- **KOBAYASHI, Katsumi**
  **Ashigarakami-gun**
  **Kanagawa 258-8577 (JP)**

(74) Representative: **Dehns**
**St. Bride's House**
**10 Salisbury Square**
**London EC4Y 8JD (GB)**

(56) References cited:
**EP-A1- 1 798 222**
**EP-A1- 1 985 669**
**WO-A1-2006/038587**
**WO-A1-2012/017872**
**WO-A1-2013/047238**
**WO-A1-2014/157005**
**WO-A1-2014/168165**
**JP-A- 2007 230 802**
**JP-A- 2009 161 418**
**JP-A- 2013 541 411**
**JP-A- 2014 139 111**
**JP-A- 2015 193 572**
**US-A1- 2010 258 175**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 272 814 B1

## Description

## BACKGROUND OF THE INVENTION

1. Field of the Invention

The present invention relates to a ruthenium complex dye, a dye solution, a photoelectric conversion element, and a dye-sensitized solar cell.

2. Description of the Related Art

Photoelectric conversion elements are used in various photosensors, copying machines, photoelectrochemical cells such as solar cells, and the like. These photoelectric conversion elements have adopted various systems to be put into use, such as systems utilizing metals, systems utilizing semiconductors, systems utilizing organic pigments or dyes, or combinations of these elements. In particular, solar cells utilizing inexhaustible solar energy do not necessitate fuels, and full-fledged practicalization of solar cells as an inexhaustible clean energy is being highly expected. Above all, research and development of silicon-based solar cells have long been in progress, and many countries also support policy-wise considerations, and thus dissemination of silicon-based solar cells is still in progress. However, silicon is an inorganic material, and thus, naturally has limitations in terms of improvement of throughput, cost, and the like.

Thus, research is being vigorously carried out on dye-sensitized solar cells. In particular, what have built momentum toward such research was the research results from Graetzel et al. of Ecole Polytechnique Fédérale de Lausanne in Switzerland. They employed a structure in which a dye formed from a ruthenium complex was fixed on the surface of a porous titanium oxide film, and realized a photoelectric conversion efficiency which was comparable to that of amorphous silicon. Thus, dye-sensitized solar cells that can be produced even without use of expensive vacuum devices have instantly attracted the attention of researchers all over the world.

Hitherto, dyes called N3, N719, N749 (also referred to as Black Dye), Z907, and J2 have generally been developed as metal complex dyes for use in dye-sensitized solar cells.

The sensitizing dye for use in a dye-sensitized solar cell is required to have a high adsorption rate onto the surface of semiconductor fine particles. Generally, as the adsorption rate is higher, a greater number of the dyes can be carried onto the surface of semiconductor fine particles in a short period of time, and thus, the production efficiency can be improved and the irregularity in performance of the produced photoelectric conversion element can be reduced.

For example, in JP2012-207209A, it is described that by using a plurality of kinds of sensitizing dyes having specific structures, the adsorption rates of the dyes onto the surface of semiconductor fine particles are increased, and thus, the photoelectric conversion efficiency is improved.

In addition, in JP2014-209589A, it is described that by using a metal complex dye with a specific structure having a specific salt with a carboxyl group and a carboxyl group at a predetermined ratio, the adsorption rate is increased and the heat resistance is improved.

WO2014/025040 discloses an antibacterial transparent film which comprises a plastic base and a curable resin layer that is laminated on at least one surface of the plastic base.

EP1985669 A1 discloses a transition metal complex as a new photosensitizer dye, and an oxide semiconductor electrode and a dye-sensitized solar cell containing the photosensitizer dye.

## SUMMARY OF THE INVENTION

The present invention has an object to provide a ruthenium complex dye which is suitable as a photoelectric conversion element or a sensitizing dye of a dye-sensitized solar cell, in which the adsorption rate onto the surface of semiconductor fine particles is increased to a high extent, and thus, it is possible to produce a photoelectric conversion element or a dye-sensitized solar cell exhibiting excellent photoelectric conversion efficiency. The present invention has another object to provide a dye solution including the ruthenium complex dye. The present invention has still another object to provide a photoelectric conversion element or a dye-sensitized solar cell, each using the ruthenium complex dye.

Taking the objects into consideration, the present inventors have repeatedly conducted extensive studies, and as a result, they have found that by setting the water content in the ruthenium complex dye to 0.2% to 4.0% by mass, the adsorption rate of the ruthenium complex dye onto the surface of semiconductor fine particles can be greatly increased. In addition, the present inventors have found that a photoelectric conversion element having the ruthenium complex dye carried on the surface of semiconductor fine particles exhibits excellent photoelectric conversion efficiency. The present invention has led to completion by further conducting repeated studies based on these findings.

That is, the objects of the present invention have been achieved by the following means.

[1] A ruthenium complex dye having a water content of 0.2% to 4.0% by mass, wherein the ruthenium complex dye is represented by Formula (1),

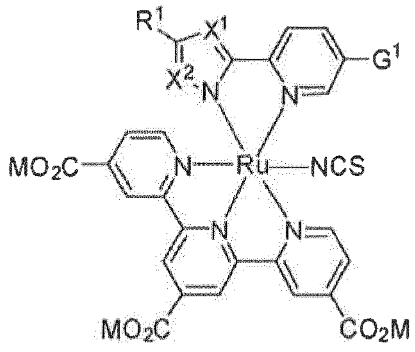

Formula (1)

in Formula (1), M represents a hydrogen ion or a cation; $X^1$ represents a nitrogen atom or $CR^2$, in a case where $X^1$ is a nitrogen atom, $X^2$ represents a nitrogen atom, and in a case where $X^1$ is $CR^2$, $X^2$ represents nitrogen atom or $CR^3$; $R^1$ to $R^3$ each represent a hydrogen atom, an alkyl group, a heteroaryl group an aryl group, or a halogen atom; and $G^1$ represents an alkenyl group or a group having a structure represented by Formula (G1),

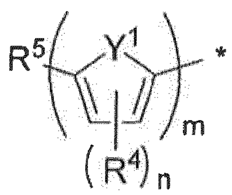

Formula (G1)

in Formula (G1), $R^4$ represents an alkyl group, an alkynyl group, an alkenyl group, an alkoxy group, an alkylthio group, an amino group, a heteroaryl group, or an aryl group; $R^5$ represents a hydrogen atom, an alkyl group, an alkynyl group, a alkenyl group, an alkoxy group, an alkylthio group, an amino group, a heteroaryl group, or an aryl group;

m represents an integer of 1 to 3; n represents an integer of 0 to 2; $Y^1$ represents an oxygen atom, a sulfur atom, $NR^f$, a Se atom, $CR^f_2$, or $SiR^f_2$; $R^f$ represents a hydrogen atom or an alkyl group; and * represents a bonding moiety to the pyridine ring in Formula (1).

[2] The ruthenium complex dye as described in [1], in which $X^1$ is CH and $X^2$ is a nitrogen atom.

[3] The ruthenium complex dye as described in [1] or [2], in which $Y^1$ is a sulfur atom.

[4] The ruthenium complex dye as described in any one of [1] to [3], in which n is 0.

[5] The ruthenium complex dye as described in any one of [1] to [4], in which $R^1$ is an alkyl group.

[6] The ruthenium complex dye as described in any one of [1] to [5], in which $R^5$ is an alkyl group, an alkynyl group, an alkenyl group, an alkoxy group, or an alkylthio group.

[7] A ruthenium complex dye having a water content of 0.2% to 4.0% by mass, in which the ruthenium complex dye is represented by Formula (2),

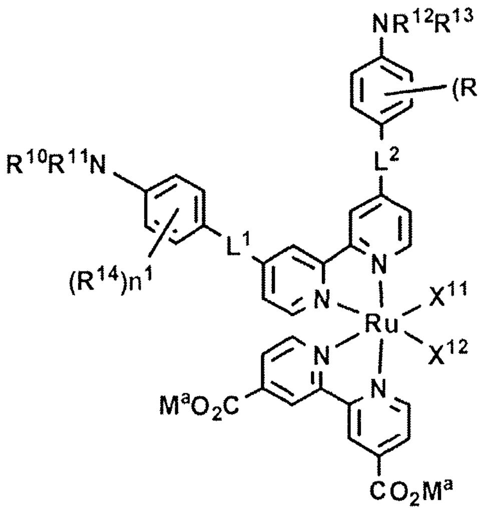

Formula (2)

in Formula (2), $R^{10}$ to $R^{13}$ each represent an alkyl group, an aryl group, or a heteroaryl group or $R^{10}$ and $R^{11}$, and $R^{12}$ and $R^{13}$, may be bonded to each other to form a nitrogen-containing ring; $R^{14}$ and $R^{13}$ each represent an alkyl group, an alkoxy group, an amino group, or a halogen atom; $n^1$ and $n^2$ each independently represent an integer of 0 to 4; $L^1$ and $L^2$ each represent a single bond or a divalent linking group formed of a conjugated chain; $X^{11}$ and $X^{12}$ each represent a thiocyanato group, an isothiocyanato group, a cyano group, an isonitrile group, or a halogen atom; and $M^a$ represents a hydrogen ion or a cation.

[8] The ruthenium complex dye as described in [7], in which $L^1$ and $L^2$ are each an ethenylene group or an ethynylene group.

[9] The ruthenium complex dye as described in any one of[1] to [8], wherein the water content is 0.5% to 3.5% by mass.

[10] The ruthenium complex dye as described in [9], wherein the water content is 1.0% to 3.0% by mass.

[11] The ruthenium complex dye as described in [10], wherein the water content is 1.5% to 2.5% by mass.

[12] The ruthenium complex dye as described in any one of [1] to [11], used as a sensitizing dye of a dye-sensitized solar cell.

[13] A dye solution comprising the ruthenium complex dye as described in any one of [1] to [12].

[14] A photoelectric conversion element comprising an electrically conductive support, a photoconductor layer including an electrolyte, a charge transfer layer including an electrolyte, and a counter electrode, in which the photoconductor layer has semiconductor fine particles having the ruthenium complex dye as described in any one of [1] to [11] carried thereon.

[15] A dye-sensitized solar cell comprising the photoelectric conversion element as described in [14].

In the present specification, unless otherwise specified, in a case where the E configuration and Z configuration exist in the molecule for a double bond, the double bond may be either one of the two configurations or a mixture thereof.

When there are a plurality of substituents, linking groups, ligands, or the like (hereinafter referred to as substituents or the like) represented by specific symbols or formulae, or when a plurality of substituents and the like are defined at the same time, the respective substituents or the like may be the same as or different from each another unless otherwise specified. This also applies to the definition of the number of substituents or the like. Further, when a plurality of substituents and the like are close to each other (in particular, adjacent to each other), they may be linked to each other to form a ring unless otherwise specified.

Furthermore, the ring, for example, an aromatic ring or an aliphatic ring may further be fused to form a fused ring.

In the present specification, expressions of a compound (including a complex and a dye) are meant to encompass, in addition to the compound itself, salts and ions of the compound. Further, within a range exhibiting desired effects, the expressions are used to mean inclusion of modifications of a part of the structure. In addition, a compound in which substitution or non-substitution is not explicitly described is meant to indicate that compound may have an arbitrary substituent within a range exhibiting the desired effects. This also applies to substituents, linking groups, and ligands. A preferred range of this arbitrary substituent includes a group selected from a substituent group $Z^R$ which will be described later.

Moreover, in the present specification, a numerical value range represented by "(a value) to (a value)" means a range including the numerical values represented before and after "to" as a lower limit value and an upper limit value, respectively.

The ruthenium complex dye of the present invention has the adsorption rate onto the surface of semiconductor

fine particles which increases a high extent, and by using the dye as a sensitizing dye, it is possible to obtain a photoelectric conversion element or a dye-sensitized solar cell, exhibiting excellent photoelectric conversion efficiency. The dye solution of the present invention includes the ruthenium complex dye of the present invention, and by using the dye solution for the formation of the photoconductor layer of a photoelectric conversion element or a dye-sensitized solar cell, it is possible to obtain a photoelectric conversion element or a solar cell, exhibiting excellent photoelectric conversion efficiency.

The above and other characteristics and advantages of the present invention will be further clarified from the following description appropriately with reference to drawings attached hereto.

## BRIEF DESCRIPTION OF THE DRAWINGS

Fig. 1 is a cross-sectional view schematically showing a photoelectric conversion element in the first aspect in which the ruthenium complex dye of the present invention is used as a sensitizing dye, including an enlarged view of the circled portion in the layer thereof, in a system in which the photoelectric conversion element is applied in cell uses.

Fig. 2 is a cross-sectional view schematically showing a dye-sensitized solar cell including a photoelectric conversion element in the second aspect in which the ruthenium complex dye of the present invention is used as a sensitizing dye.

## DESCRIPTION OF THE PREFERRED EMBODIMENTS

[Ruthenium Complex Dye]

The ruthenium complex dye of the present invention is an octahedral six-coordinate complex. If the ruthenium complex dye of the present invention has a water content of 0.2% to 4.0% by mass, it is not particularly limited in its structure, and arbitrary ruthenium complex dyes which can function as a photoelectric conversion element or a sensitizing dye of a dye-sensitized solar cell can be widely used. For example, the ruthenium complex dyes described in paragraphs [0037] to [0040] and [0075] to [0078] of JP2013-72080A, paragraphs [0077] to [0084] of JP2013-84594A, paragraph [0026] of JP2008-507570A, paragraphs [0060] to [0062] of WO2009/020098A, paragraphs [0025] to [0036] of US2012/0111410A, paragraphs [0024] to [0052] of JP2009-200028A, paragraphs [0105] and [0106] of JP2014-209588A, paragraphs [0043] to [0045] of JP2007-302879A, paragraphs [0067] and [0084] of WO2007/091525A, Journal of Materials Chemistry A, 2014, Vol. 2, pp. 17618 to 17627 and Electronic Supplementary Information in the same document, Journal of the American Chemical Society, 2001, Vol. 123, pp. 1613 to 1624, Inorganic Chemistry, 1999, Vol. 38, pp. 6298 to 6305, Inorganic Chemistry, 2004, Vol. 43, pp. 4216 to 4226, Journal of the American Chemical Society, 2008, Vol. 130, pp. 10720 to 10728, ACS nano, 2009, Vol. 3, pp. 3103 to 3109, and Journal of the Physical Chemistry C, 2009, Vol. 113, pp. 6290 to 6297 can be used.

The water content of the ruthenium complex dye, defined in the present invention, does not include moisture (adhering water) that is present simply adhering to the surface of the ruthenium complex dye. That is, in the crystal structure of the ruthenium complex dye, the moisture content defined in the present invention is calculated, based on the amount of water that is present as crystallized water, hydrated water, or the like.

The adhering water of the ruthenium complex dye can be evaporated by spreading 1 g or less of the ruthenium complex dye across the whole Petri dish having a diameter of 10 cm, and continuously blast-dried using dry air (with a humidity of 20% or less) at 25°C. For a sample thus obtained by evaporation of adhering water, in thermogravimetric analysis (TG) measurement, a decrease in the weight is not observed at a temperature lower than the temperature at which a noticeable decrease in the weight of the dye due to evaporation of crystallized water or hydrated water occurs. That is, adhering water can be sufficiently evaporated under the drying conditions. The water content of the ruthenium complex dye in the present invention is defined as a value determined by measuring the amount of moisture immediately after drying the ruthenium complex dye under the drying conditions. Measurement of the moisture amount of the ruthenium complex dye can be carried out by the method described in Examples which will be described later.

The water content of the ruthenium complex dye of the present invention can be regulated to a desired level, for example, by appropriately regulating the kind or the water content of a solvent used in the crystallization of the ruthenium complex dye, crystallization conditions (a crystallization method, a concentration, a temperature, time, stirring efficiency, and the like), or drying conditions (time, a temperature, a humidity, pressure reducing conditions in the drying under reduced pressure, the air volume or humidity in the blast drying, the kind of a dessicator in the drying using the desiccator) of the obtained crystals.

When a sensitizing dye is carried (adsorbed) onto the surface of semiconductor fine particles in the production of the photoelectric conversion element or the dye-sensitized solar cell, a method in which a dye solution is prepared by dissolving a dye in an organic solvent, and the dye solution is applied onto the surface of semiconductor fine particles

is generally used. At that time, in order to reduce the incorporation of moisture into the dye solution to a highest degree, a dehydrated solvent or used or a sensitizing dye that has been sufficiently dried is used to prepare the dye solution. This is due to a concern that the moisture in the solution may cause aggregation of the sensitizing dye, or the like.

In contrast, the ruthenium complex dye of the present invention is a dye containing a certain amount or more of moisture (excluding adhering water). Under the above-mentioned circumstances, the present inventors have found that by using a ruthenium complex dye containing a certain amount of moisture as a sensitizing dye in the production of a photoelectric conversion element or a dye-sensitized solar cell, the adsorption rate of the dye onto the surface of semiconductor fine particles can be increased to a high extent, and a photoelectric conversion element in which the dye is used as a sensitizing dye exhibits excellent photoelectric conversion efficiency.

Although the reason why the adsorption rate can be increased by setting the water content to a specific range is not clear, it is presumed to be that the ruthenium complex dye forms an association state via water, and thus, the adsorption rate onto the surface (hydrophilic surface) of semiconductor fine particles can be increased.

Furthermore, the reason why the photoelectric conversion efficiency is improved is presumed to be that a balance between hydrophilicity and hydrophobicity in a molecule of the ruthenium complex dye is changed due to the presence of moisture, and thus, there occurs a difference in orientation or density during the adsorption onto the surface of the semiconductor fine particles. This is also consistent with the fact that the effects of the water content vary depending on the structure of the ruthenium complex dye. That is, as the bias in the hydrophilicity and hydrophobicity in the molecule is higher, the action of improving the adsorption rate or the photoelectric conversion efficiency by setting the water content to those defined in the present invention. For example, a terpyridine tricarboxylic acid-type ruthenium complex dye (preferably a ruthenium complex dye having a tridentate ligand with a structure in which each of the pyridine rings of terpyridine has one carboxyl group) has a high interaction with water molecules and has a carboxyl group (carboxyl group which does not contribute to adsorption) which can interact with water molecules after adsorption onto the surface of the semiconductor fine particles. In addition, by setting the water content to one defined in the present invention, the adsorption rate and the photoelectric conversion efficiency are greatly improved.

Here, by dissolving the ruthenium complex dye having a water content of less than 0.2% by mass in a solvent containing moisture, a dye solution is prepared such that the moisture content in the solution is adjusted to be the same as the moisture content in the solution at a time when a ruthenium complex dye having a water content of 0.2% to 4.0% by mass is dissolved in a solvent, and in a case where the dye is adsorbed on the surface of the semiconductor fine particles by using the dye solution, the effect of the present invention is not obtained. That is, it is necessary that the moisture included in the ruthenium complex dye of the present invention is moisture capable of maintaining an interaction state with the ruthenium complex dye even after being dissolved in a solvent such as crystallized water and hydrated water, while not being diffused in a solvent such as adhering water.

The water content of the ruthenium complex dye of the present invention is preferably 0.5% to 4.0% by mass, more preferably from 0.5% to 3.5% by mass, still more preferably 1.0% to 3.0% by mass, even still more preferably 1.2% to 2.7% by mass, and particularly preferably 1.5% to 2.5% by mass.

The water content of the ruthenium complex dye can be measured by the method described in Examples which will be described later.

From the viewpoint of effectively meeting an action of improving the adsorption rate by setting the water content to one defined in the present invention and an action of improving the photoelectric conversion efficiency, it is preferable that the ruthenium complex dye of the present invention has a tridentate ligand represented by Formula (L), and it is more preferable that the ruthenium complex dye of the present invention is a ruthenium complex dye represented by Formula (1).

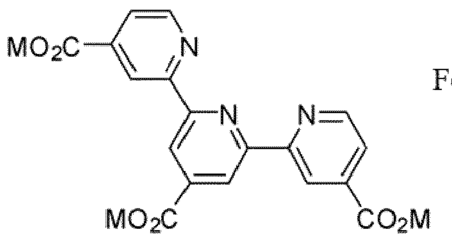

Formula (L)

In Formula (L), M represents a hydrogen ion or a cation. The cation which can be adopted by M is not particularly limited, but examples thereof include positive counterions (excluding protons) in the following counterions CI. Among those, an alkali metal ion or an ammonium ion is preferable.

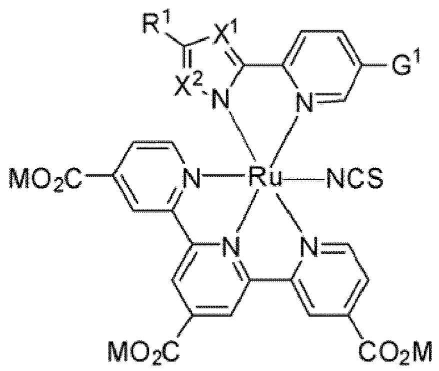

Formula (1)

In the formula, M has the same definition as M in Formula (L). $X^1$ represents a nitrogen atom or $CR^2$. In a case where $X^1$ is a nitrogen atom, $X^2$ represents a nitrogen atom, and In a case where $X^1$ is $CR^2$, $X^2$ represents a nitrogen atom or $CR^3$. $R^1$ to $R^3$ each represent a hydrogen atom, an alkyl group, a heteroaryl group, an aryl group, or a halogen atom. $G^1$ represents an alkenyl group or a group represented by Formula (G1).

Preferred aspects of the alkyl group, the heteroaryl group, the aryl group, and the halogen atom in $R^1$ to $R^3$ are the same as the preferred aspects of the group corresponding to the substituent group $Z^R$ which will be described later.

The alkyl group which can be adopted as $R^1$ to $R^3$ is more preferably an alkyl group substituted with an electron withdrawing group, and still more preferably a halogen atom, in particular, an alkyl group substituted with a fluorine atom. In the alkyl group substituted with a hydrogen atom, the number of halogen atoms for the substitution is not particularly limited, and is 1 or more, preferably no more than the number of hydrogen atoms contained in the alkyl group before the substitution, more preferably 1 to 6, and still more preferably 1 to 3. Among these, the alkyl group substituted with a halogen atom is preferably a perhalogenated alkyl group in which all of the hydrogen atoms contained in the alkyl group are substituted, more preferably a perfluoroalkyl group, and still more preferably trifluoromethyl.

The aryl group which can be adopted by $R^1$ to $R^3$ is more preferably an aryl group substituted with an electron withdrawing group, and still more preferably a halogen atom, in particular, an aryl group substituted with a fluorine atom. In the aryl group substituted with a hydrogen atom, the number of halogen atoms for the substitution is not particularly limited, and is 1 or more, preferably no more than the number of hydrogen atoms contained in the aryl group before the substitution, more preferably 2 to 5, and still more preferably 3 to 5. Among these, the aryl group substituted with a halogen atom is preferably a phenyl group substituted with a halogen atom, and examples thereof include 2,3,4,5-tetrafluorophenyl and 2,3,4,5,6- pentafluorophenyl.

The heteroaryl group which can be adopted by $R^1$ to $R^3$ has any one of a nitrogen atom, an oxygen atom, and a sulfur atom as a ring-constituting atom, and is more preferably a heteroaryl group having 5 or 6 ring members, and still more preferably a heteroaryl group having any one of a nitrogen atom and a sulfur atom as a ring-constituting atom. Further, the heteroaryl group may have a substituent, and examples of the substituent include a group selected from the substituent group $Z^R$ which will be described later, with an alkyl group being preferable. Specific examples of the heteroaryl group include 3-pyridinyl, 5-methyl-2-thiophenyl, and 2-thiazolyl.

$R^1$ is preferably an alkyl group, a heteroaryl group, an aryl group, or a halogen atom, more preferably an alkyl group substituted with a fluorine atom, an aryl group substituted with a fluorine atom, or a heteroaryl group, and still more preferably an alkyl group substituted with a fluorine atom.

$R^2$ is preferably, among the respective above-mentioned groups, a hydrogen atom or an alkyl group, more preferably a hydrogen atom or an alkyl group having 1 to 3 carbon atoms, and still more preferably a hydrogen atom.

$R^3$ is preferably a hydrogen atom.

$X^1$ is preferably $CR^2$.

The combination of $X^1$ and $X^2$ (hereinafter described in the order of ($X^1$, $X^2$)) is preferably (a nitrogen atom, a nitrogen atom) or ($CR^2$, a nitrogen atom), more preferably (a nitrogen atom, a nitrogen atom) or (CH, a nitrogen atom), and still more preferably (CH, a nitrogen atom).

$G^1$ is an alkenyl group or a group represented by Formula (G1). In a case where $G^1$ is an alkenyl group, the number of carbon atoms thereof is preferably 2 to 30, more preferably 2 to 20, and still more preferably 2 to 15. An aspect in which the alkenyl group has a substituent is preferable, and an aspect in which the alkenyl group has an aryl group or a heteroaryl group as a substituent is more preferable. Preferred aspects of the aryl group and the heteroaryl group are the same as the preferred aspects of the aryl group and the heteroaryl group in the substituent group $Z^R$ which will be described later. The aryl group and the heteroaryl group are each preferably a monocyclic structure. The aryl group and the heteroaryl group may further be substituted with an alkyl group, and preferred aspects thereof are the same as the preferred aspects of the alkyl group in the substituent group $Z^R$ which will be described later.

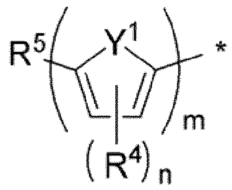

Formula (G1)

In the formula, $R^4$ represents an alkyl group, an alkynyl group, an alkenyl group, an alkoxy group, an alkylthio group, an amino group, a heteroaryl group, or an aryl group. $R^5$ represents a hydrogen atom, an alkyl group, an alkynyl group, an alkenyl group, an alkoxy group, an alkylthio group, an amino group, a heteroaryl group, or an aryl group.

m represents an integer of 1 to 3. n represents an integer of 0 to 2.

$Y^1$ represents an oxygen atom, a sulfur atom, $NR^f$, a selenium atom, $CR^f_2$, or $SiR^f_2$. Here, $R^f$ represents a hydrogen atom or an alkyl group. * represents a bonding moiety to the pyridine ring in Formula (1).

Preferred aspects of the respective groups which can be adopted as $R^4$, $R^5$, and, $R^f$ are the same as the preferred aspects of the corresponding group in the substituent group $Z^R$ which will be described later.

$R^4$ is preferably, among the respective above-mentioned groups, an alkyl group, an alkoxy group, an alkylthio group, an amino group, an aryl group, or a heteroaryl group, more preferably an alkyl group, an alkoxy group, an alkylthio group, an amino group, or a heteroaryl group, and still more preferably an alkyl group, an alkoxy group, or an alkylthio group.

n is preferably 0 or 1; in a case where $R^5$ is a hydrogen atom, n is preferably 1; and in a case where $R^5$ is not a hydrogen atom, n is preferably 0.

In a case where n is 2, two $R^4$'s may be bonded to each other to form a ring, and adjacent $R^4$ and $R^5$ may be bonded to each other to form a ring. Examples of the ring to be formed include aryl rings such as a benzene ring and heteroaryl rings such as a pyrazine ring, a pyrrole ring, and a thiophene ring; unsaturated hydrocarbon rings not exhibiting aromaticity, such as a cyclopentadiene ring; heterocycles not exhibiting aromaticity, such as a 1,4-dioxane ring and a 2,3-dihydropyrazine ring; and a ring formed by fusion of these rings (for example, a benzothiophene ring).

$R^5$ is preferably, among the respective above-mentioned groups, a hydrogen atom, an alkyl group, an alkynyl group, an alkenyl group, an alkoxy group, an alkylthio group, or an amino group, more preferably an alkyl group, an alkynyl group, an alkenyl group, an alkoxy group, or an alkylthio group, still more preferably an alkyl group, an alkynyl group, or an alkylthio group, and particularly preferably an alkyl group. The heteroaryl group which can be adopted by $R^5$ does not include a ring containing $Y^1$ in Formula (G1).

$Y^1$ is preferably an oxygen atom, a sulfur atom, or $NR^f$, more preferably an oxygen atom or a sulfur atom, and still more preferably a sulfur atom.

m is preferably 1 or 2, and more preferably 1.

In a case where m is 2 or 3, and among $R^4$'s containing ring including adjacent $Y^1$'s, $R^4$ having a ring including one of $Y^1$'s is bonded to the ring including the other $Y^1$ to form a ring, or $R^4$'s having a ring including adjacent two $Y^1$'s may be bonded to each other to form a ring. The ring to be formed has the same definition as the ring formed by $R^4$.

The group represented by Formula (G1) is preferably a group represented by any one of Formulae (G1-1a) to (G1-7a), more preferably a group represented by Formula (G1-1a) or Formula (G1-5a), and still more preferably a group represented by Formula (G1-1a).

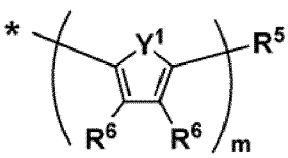

Formula (G1-1a)

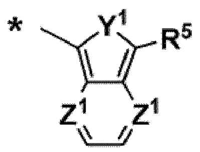

Formula (G1-2a)

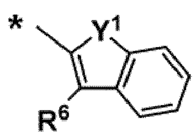

Formula (G1-3a)

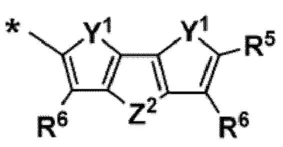

Formula (G1-4a)

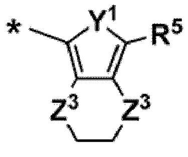

Formula (G1-5a)

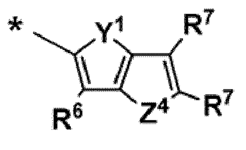

Formula (G1-6a)

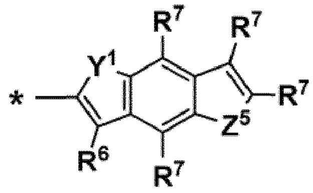

Formula (G1-7a)

In Formulae (G1-1a) to (G1-7a), $R^5$, $Y^1$, and m each have the same definitions as $R^5$, $Y^1$, and m, respectively, in Formula (G1), and preferred ranges thereof are also the same.

$R^6$ represents a hydrogen atom, an alkyl group, an alkynyl group, an alkenyl group, an alkoxy group, an alkylthio group, an amino group, a heteroaryl group, or an aryl group.

$R^7$ represents a hydrogen atom or a substituent (preferably an alkyl group, an alkynyl group, an alkenyl group, an alkoxy group, an alkylthio group, an amino group, a heteroaryl group, or an aryl group).

The alkyl group, the alkynyl group, the alkenyl group, the alkoxy group, the alkylthio group, the amino group, the heteroaryl group, and the aryl group, which can be adopted as $R^6$ and $R^7$, each have the same definitions as the alkyl group, the alkynyl group, the alkenyl group, the alkoxy group, the alkylthio group, the amino group, the heteroaryl group, and the aryl group which can be adopted as $R^4$ in Formula (G1), and preferred ranges thereof are also the same. $R^6$ and $R^7$ are each preferably a hydrogen atom, an alkyl group, an alkoxy group, an alkylthio group, an amino group, an aryl group, or a heteroaryl group, more preferably a hydrogen atom, an alkyl group, an alkoxy group, an alkylthio group, an amino group, or a heteroaryl group, still more preferably a hydrogen atom, an alkyl group, an alkoxy group, or an alkylthio group, and particularly preferably a hydrogen atom.

$Z^1$ represents a nitrogen atom, $CR^a$, or is preferably a nitrogen atom.

$Z^2$ to $Z^5$ each represent an oxygen atom, a sulfur atom, $NR^b$, $CR^b_2$, a selenium atom, or $SiR^b_2$. $Z^2$ is preferably $NR^b$ or $CR^b_2$, and $Z^3$ to $Z^5$ are each preferably an oxygen atom or a sulfur atom.

$R^a$ and $R^b$ each represent a hydrogen atom or an alkyl group. Preferred aspects of the alkyl group which can be adopted by $R^a$ and $R^b$ are the same as the preferred aspects of the alkyl group in the substituent group $Z^R$ which will be described later.

Furthermore, a ruthenium complex dye represented by Formula (2) can be used as the ruthenium complex dye of the present invention.

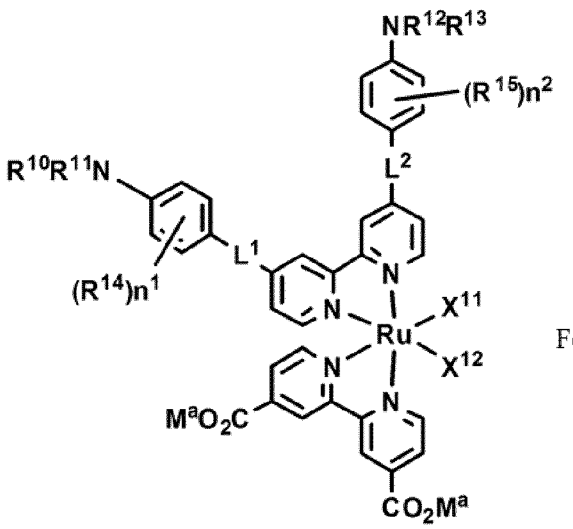

Formula (2)

In Formula (2), $R^{10}$ to $R^{13}$ each independently represent an alkyl group, an aryl group, or a heteroaryl group. In this case, $R^{10}$ and $R^{11}$, and $R^{12}$ and $R^{13}$ may be bonded to each other to form a nitrogen-containing ring.

$R^{14}$ and $R^{15}$ each represent an alkyl group, an alkoxy group, an amino group, or a halogen atom.

$n^1$ and $n^2$ each independently represent an integer of 0 to 4.

$L^1$ and $L^2$ each represent a single bond or a divalent linking group formed of a conjugated chain.

$X^{11}$ and $X^{12}$ each represent a thiocyanato group, an isothiocyanato group, a cyano group, an isonitrile group, or a halogen atom.

M represents a hydrogen ion or a cation.

Preferred aspects of the alkyl group, the aryl group, and the heteroaryl group in $R^{10}$ to $R^{13}$ are the same as the preferred aspects of the corresponding groups in the substituent group $Z^R$ which will be described later.

The alkyl group which can be adopted as $R^{10}$ to $R^{13}$ preferably has 1 to 15 carbon atoms, and more preferably has 1 to 10 carbon atoms. The alkyl group which can be adopted as $R^{10}$ to $R^{13}$ may be linear or branched. Specific examples thereof include methyl, hexyl, 2-ethylhexyl, and decyl.

The alkyl group which can be adopted as $R^{10}$ to $R^{13}$ may have a substituent. Examples of the substituent include a group selected from the substituent group $Z^R$ which will be described later.

The aryl group which can be adopted as $R^{10}$ to $R^{13}$ preferably has 6 to 24 carbon atoms, and more preferably 6 to 12 carbon atoms. Specific examples thereof include phenyl, naphthyl, anthryl, pyrenyl, biphenyl, and fluorenyl. Among those, phenyl or naphthyl is preferable.

The aryl group which can be adopted as $R^{10}$ to $R^{13}$ may have a substituent. Examples of the substituent include a group selected from the substituent group $Z^R$ which will be described later, with an alkyl group (more preferably methyl, ethyl, propyl, n-butyl, or t-butyl), an alkoxy group (more preferably methoxy or hexyloxy), or an amino group (more preferably a diethylamino group or a diphenylamino group) is preferable.

The heteroaryl group which can be adopted as $R^{10}$ to $R^{13}$ preferably has 5 to 16 carbon atoms, and more preferably 8 to 12 carbon atoms. Specific examples thereof include benzodithiophenyl, dibenzothiophenyl, carbazolyl, and phenothiazinyl.

The heteroaryl group which can be adopted as $R^{10}$ to $R^{13}$ may have a substituent. Examples of the substituent include a group selected from the substituent $Z^R$ which will be described later.

$R^{10}$ and $R^{11}$, and $R^{12}$ and $R^{13}$ may be bonded to each other to form a nitrogen-containing ring group. The nitrogen-containing ring group formed by $R^{10}$ and $R^{11}$, and $R^{12}$ and $R^{13}$ is not particularly limited, and may be an aromatic ring group or an aliphatic ring group. Examples of such a nitrogen-containing ring include a phenothiazine ring, an acridane ring, a carbazole ring, and a dihydroazepine ring.

Each of the respective nitrogen-containing ring group may further have a substituent. Examples of the substituent include a group selected from the substituent group $Z^R$ which will be described later, with an alkyl group being preferable. Specific examples thereof include methyl and t-butyl.

Preferred aspects of the alkyl group, the alkoxy group, the amino group, and the halogen atom in $R^{14}$ and $R^{15}$ are the same as the preferred aspects of the corresponding groups in the substituent group $Z^R$ which will be described later.

The alkyl group which can be adopted as $R^{14}$ and $R^{15}$ preferably has 1 to 10 carbon atoms, and more preferably has 2 to 6 carbon atoms. The alkyl group which can be adopted as $R^{14}$ and $R^{15}$ may be linear or branched. Specific examples thereof include methyl, ethyl, and 2-ethylhexyl.

The alkoxy group which can be adopted as $R^{14}$ and $R^{15}$ preferably has 1 to 10 carbon atoms, and more preferably has 1 to 6 carbon atoms. The alkyl group which constitutes the alkoxy group may be linear or branched. Specific examples thereof include methoxy, hexyloxy, and 2-ethylhexyloxy.

The amino group which can be adopted as $R^{14}$ and $R^{15}$ preferably has 0 to 16 carbon atoms, and more preferably has 4 to 12 carbon atoms. Specific examples thereof include diethylamino, dihexylamino, and diphenylamino.

Examples of the halogen atom which can be adopted by $R^{14}$ and $R^{15}$ include a fluorine atom, a chlorine atom, a bromine atom, and an iodine atom.

$n^1$ and $n^2$ each independently represent an integer of 0 to 4, preferably 0 or 1, and particularly preferably 0.

$L^1$ and $L^2$ each represent a single bond or a divalent linking group formed of a conjugated chain.

Examples of the divalent linking group formed of a conjugated chain include an ethenylene group, an ethynylene group, an arylene group, a heteroarylene group, and a group formed by combination of these groups.

Examples of the arylene group in $L^1$ and $L^2$ include arylene groups having 6 to 16 carbon atoms, such as a phenylene group, a naphthylene group, an anthrylene group, and a pyrenylene group.

The heteroarylene group in $L^1$ and $L^2$ is preferably a divalent 5- or 6-membered ring, and more preferably contains an oxygen atom, a sulfur atom, or a nitrogen atom as a ring-constituting atom. The divalent 5- or 6-membered ring of heteroarylene group may be fused with a benzene ring or a heterocycle. As the heterocycle that constitutes the heteroarylene group, for example, a thiophene ring or a thieno[3,2-b]thiophene ring is preferable.

The divalent linking group may have a substituent. Examples of the substituent include the substituent group $Z^R$ which will be described later. Among those, the divalent linking group is preferably an alkyl group, an alkoxy group, or an aryl group. As the alkyl group, an alkyl group substituted with a halogen atom (particularly a fluorine atom), described as the alkyl group which can be adopted as $R^1$ to $R^3$, is preferable.

$L^1$ and $L^2$ are each preferably a linking group represented by the following L-1 to L-26, and more preferably an ethenylene group (L-1) or an ethynylene group (L-5). The following L-1 to L-26 may further have a substituent, and specific examples thereof include a group selected from the following substituent group $Z^R$.

Hereinafter, Me represents a methyl group, and n represents an integer of 2 to 4. * represents a linking position.

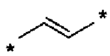
L-1
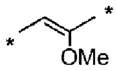
L-2
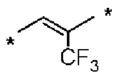
L-3
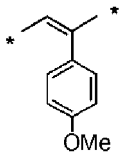
L-4
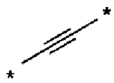
L-5
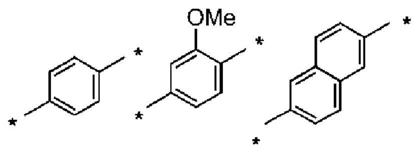
L-6 L-7 L-8

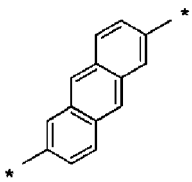
L-9
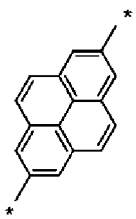
L-10
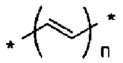
L-11
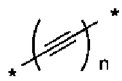
L-12
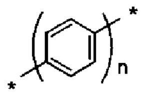
L-13
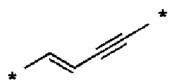
L-14
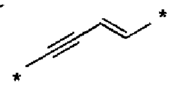
L-15

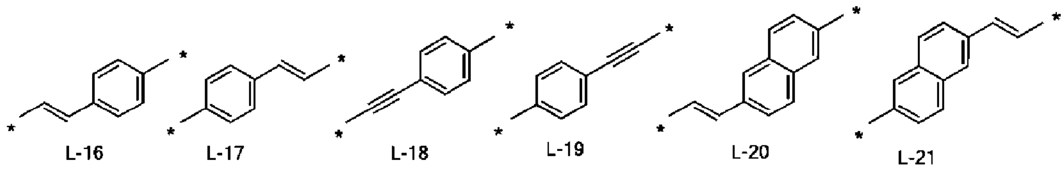
L-16 L-17 L-18 L-19 L-20 L-21

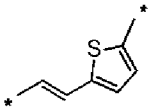
L-22
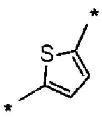
L-23
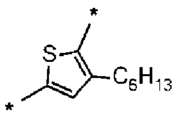
L-24
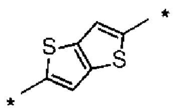
L-25
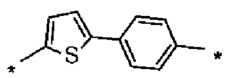
L-26

$X^{11}$ and $X^{12}$ each represent a thiocyanato group, an isothiocyanato group, a cyano group, an isonitrile group, or a halogen atom, and are each preferably a thiocyanato group or an isothiocyanato group, and more preferably an isothiocyanato group.

Examples of the halogen atom which can be adopted by $X^{11}$ and $X^{12}$ include a fluorine atom, a chlorine atom, a bromine atom, and an iodine atom, and the halogen atom is more preferably a chlorine atom or an iodine atom, and particularly preferably a chlorine atom.

$M^a$ has the same definition as M in Formula (L). Preferred aspects of $M^a$ are the same as the preferred aspects of M in Formula (L).

In the present specification, the ruthenium complex dye represented by Formula (1) or (2) also encompasses an aspect in which a counterion (CI) for neutralizing the charges of the ruthenium complex dye is included.

In a case where the counterion CI is a positive counterion, for example, the counterion CI is an inorganic or organic ammonium ion (for example, a tetraalkylammonium ion and a pyridinium ion), a phosphonium ion (for example, a tetraalkylphosphonium ion and an alkyltriphenylphosphonium ion), an alkali metal ion (a Li ion, a Na ion, a K ion, and the like), an alkaline earth metal ion, a metal complex ion, or a proton. As the positive counterion, an inorganic or organic ammonium ion (a tetraethylammonium ion, a tetrabutylammonium ion, and the like), or a proton is preferable.

In a case where the counterion CI is a negative counterion, the counterion CI is an inorganic anion or an organic anion. Examples thereof include a hydroxide ion, a halogen anion (for example, a fluoride ion, a chloride ion, a bromide ion, and an iodide ion), a substituted or unsubstituted alkylcarboxylate ion (for example, an acetate ion and a trifluoroacetate ion), a substituted or unsubstituted arylcarboxylate ion (for example, a benzoate ion), a substituted or unsubstituted alkylsulfonate ion (for example, a methanesulfonate ion and a trifluoromethanesulfonate ion), a substituted or unsubstituted arylsulfonate ion (for example, a p-toluene sulfonate ion and a p-chlorobenzene sulfonate ion), an aryldisulfonate ion (for example, a 1,3-benzene disulfonate ion, a 1,5-naphthalene disulfonate ion, and a 2,6-naphthalene disulfonate ion), an alkylsulfate ion (for example, a methylsulfate ion), a sulfate ion, a thiocyanate ion, a perchlorate ion, a tetrafluoroborate ion, a hexafluorophosphate ion, and a picrate ion. Alternatively, as a charge balance counterion, an ionic polymer or another dye with an opposite charge from the dye in interest may be used, or a metal complex ion (for example, a bisbenzene-1,2-dithiolatonickel (III)) may also be used. As the negative counterion, a halogen anion, a substituted or unsubstituted alkylcarboxylate ion, a substituted or unsubstituted alkylsulfonate ion, a substituted or unsubstituted arylsulfonate ion, an aryldisulfonate ion, a perchlorate ion, or a hexafluorophosphate ion is preferable, and a halogen anion or a hexafluorophosphate ion is more preferable.

The ruthenium complex dye represented by Formula (1) or (2) can be prepared with reference to, for example, the method described in JP2013-084594A, the method described in JP4298799B, the method described in 2001-291534A, the method described in each specification of US2013/0018189A1, US2012/0073660A1, US2012/0111410A1, and US2010/0258175A1, the method described in Angew. Chem. Int. Ed., 2011, 50, pp. 2054-2058, the method described in Chem. Commun., 2014, 50, 6379-6381, the method described in Chemical Communications, 2009, 5844-5846, the method described in Journal of Materials Chemistry A, 2014, 2, 17618-17627, the methods described in the reference documents listed in these documents, the patent documents regarding solar cells, known methods, or the methods equivalent thereto.

The maximum absorption wavelength of the ruthenium complex dye of the present invention in a solution is preferably in a range of 300 to 900 nm, more preferably in a range of 350 to 850 nm, and particularly preferably in a range of 370 to 800 nm. In addition, the absorption wavelength range is preferably throughout a region from 300 to 900 nm.

In the following description (including Examples), specific examples of the ruthenium complex dye of the present invention and reference examples of the ruthenium complex dye are shown. Further, in the following specific examples and the specific examples of Examples, metal complex dyes in which at least one of -COOH's are in the form of salts of carboxyl groups can be included. In these metal complex dyes, examples of counter cations that form salts of carboxyl groups include positive ions described as CI. The present invention is not limited thereto.

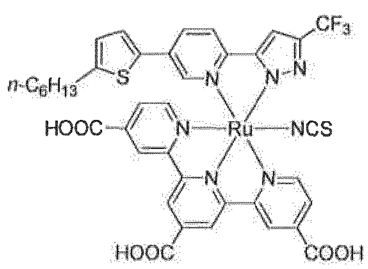
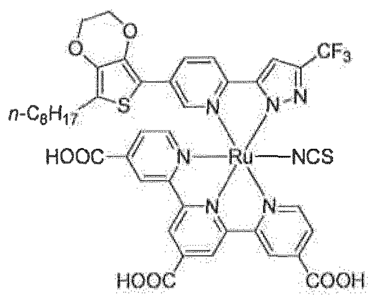
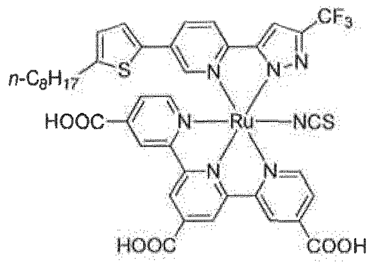

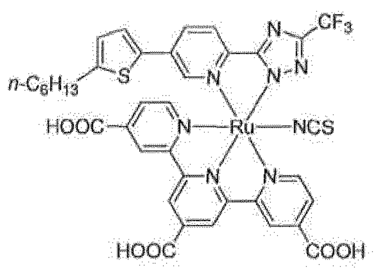
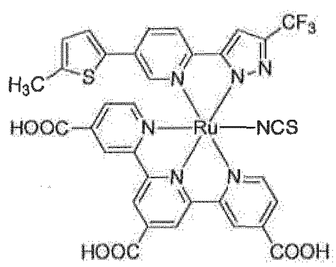
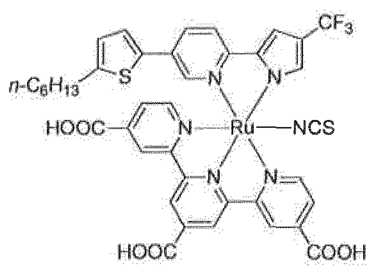

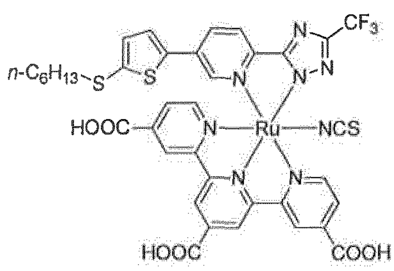
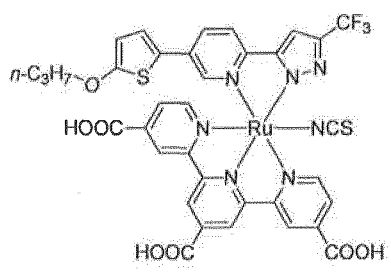

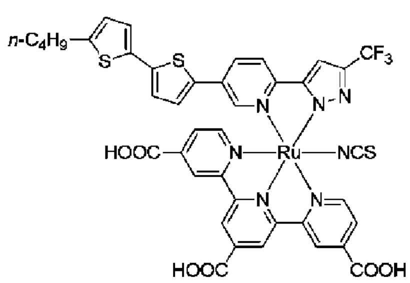
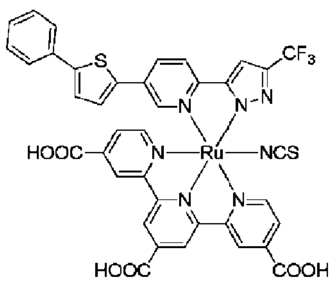
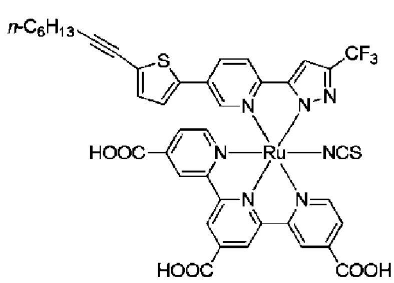

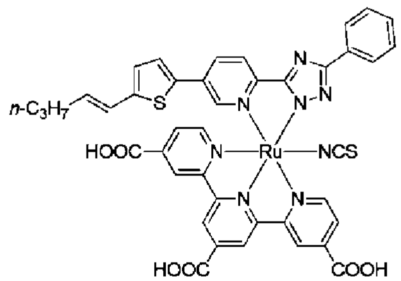
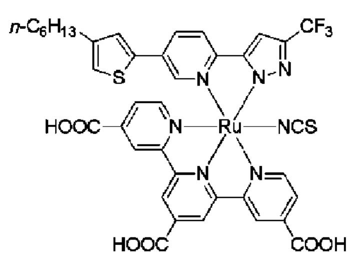
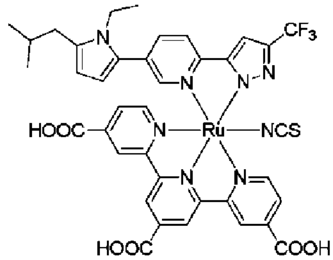

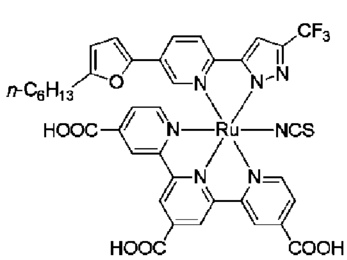
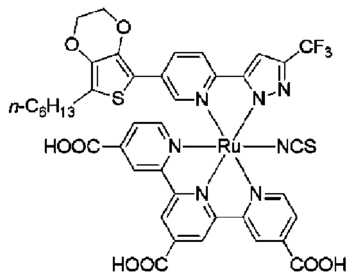

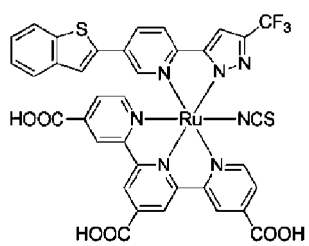
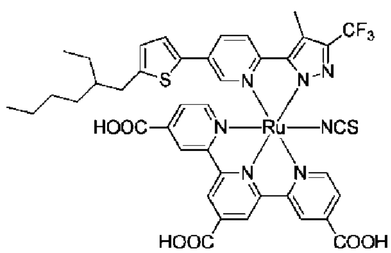
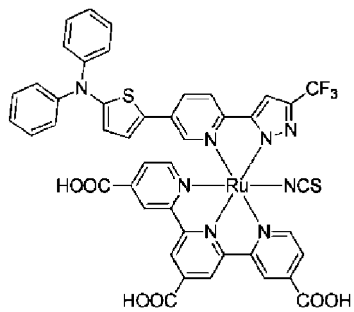

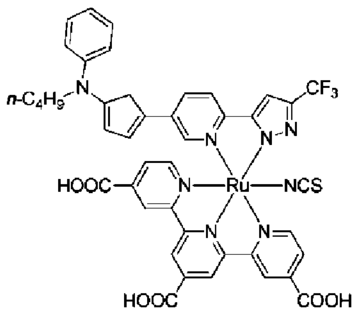
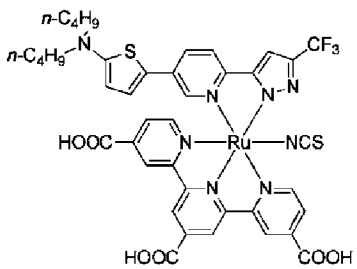
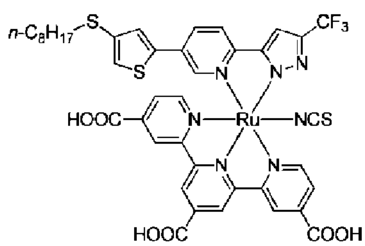

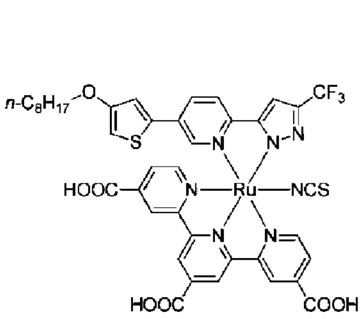

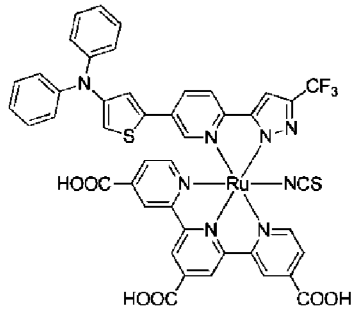

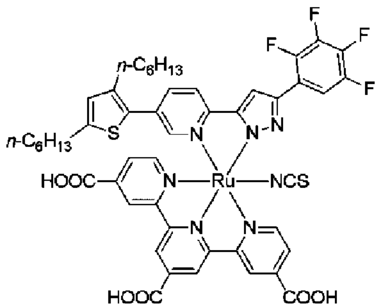

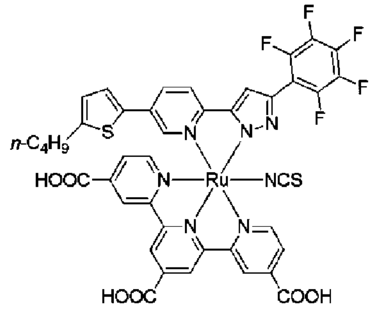

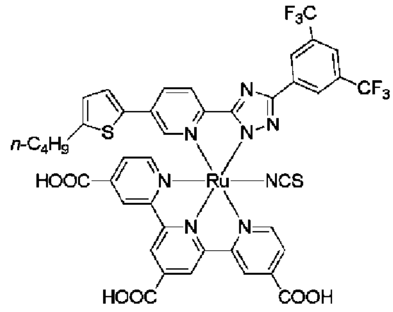

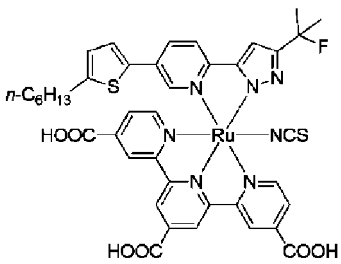

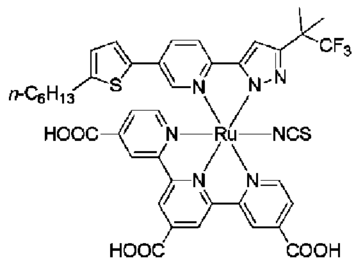

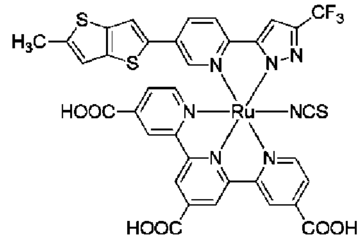

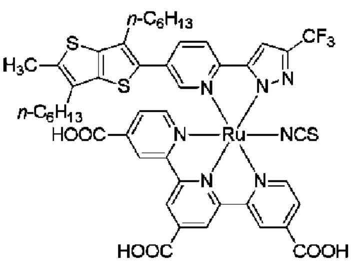

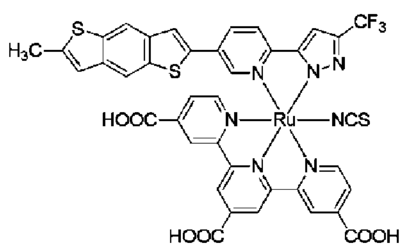

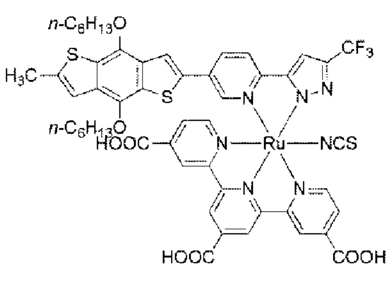

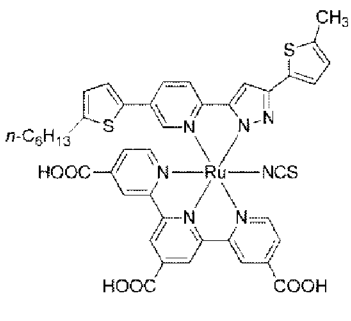

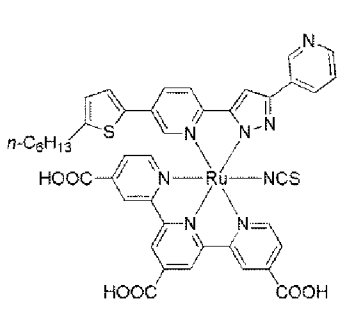

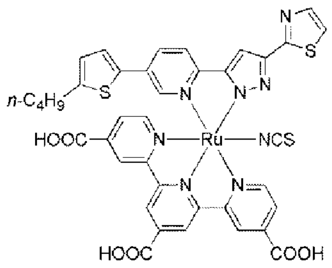
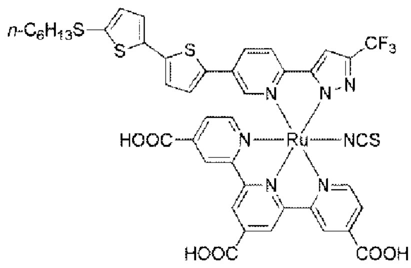
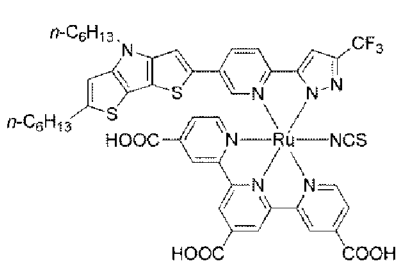

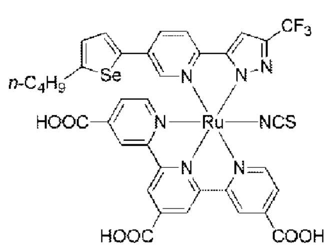
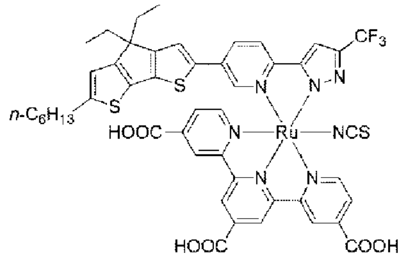

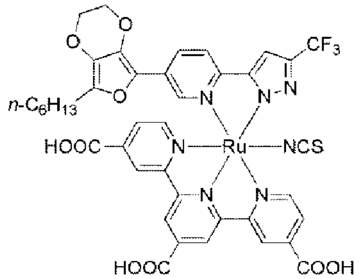
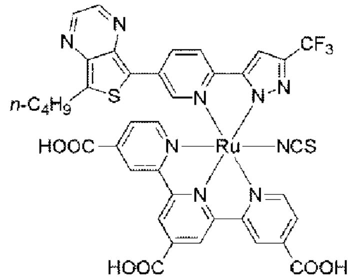
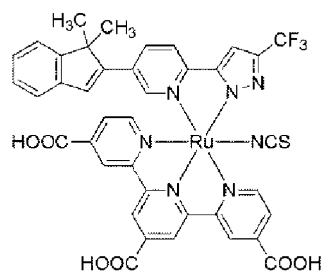

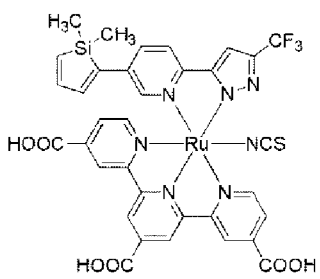
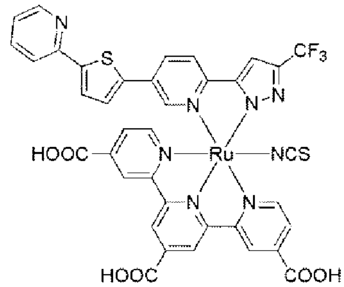
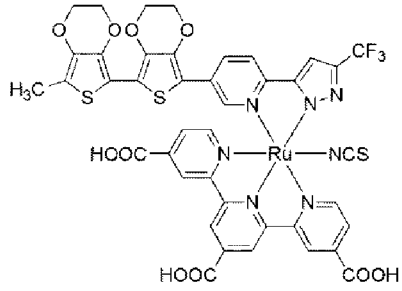

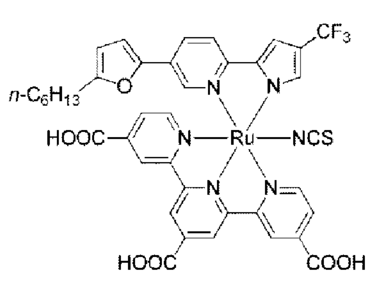
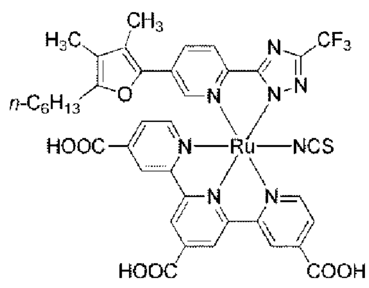
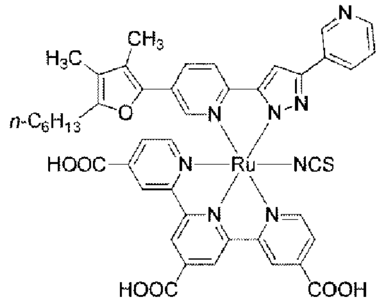

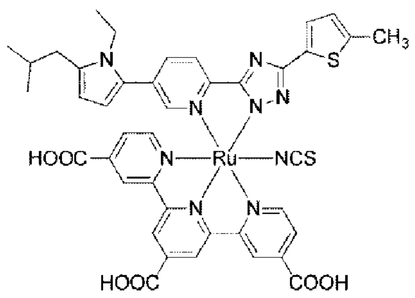

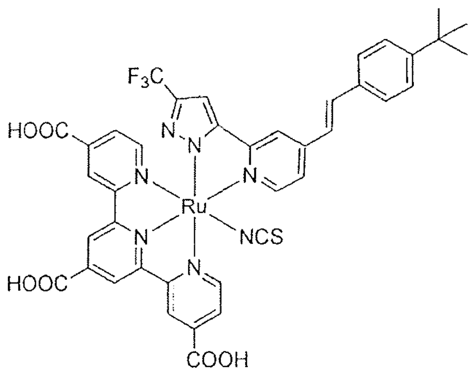

(Reference example)

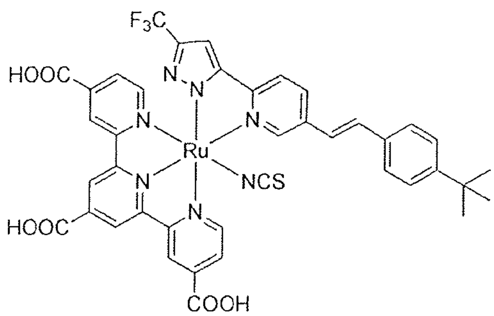

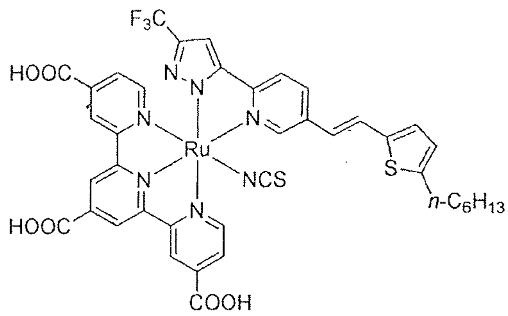

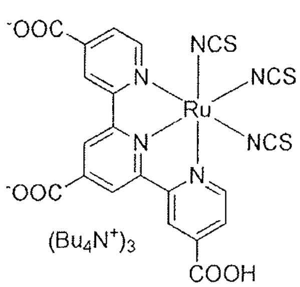

(Reference example)

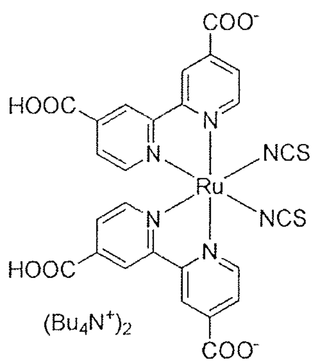

(Reference example)

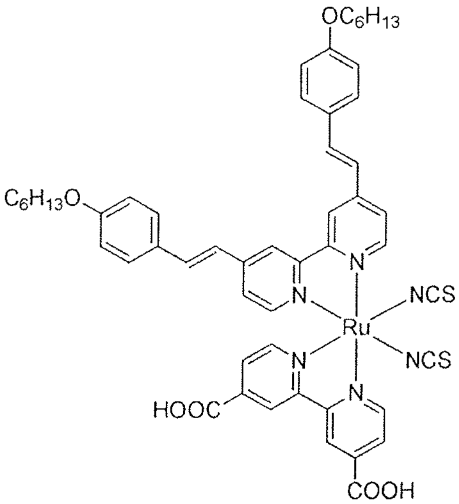

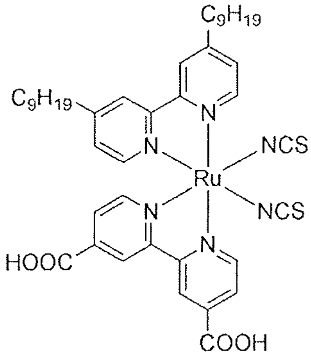

(Reference example)

(Reference example)

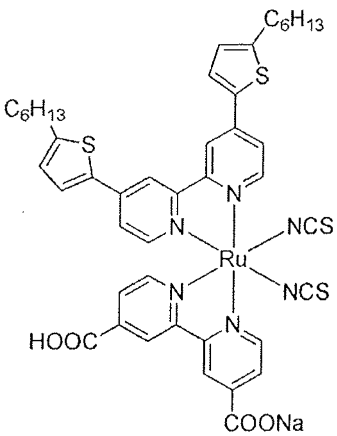

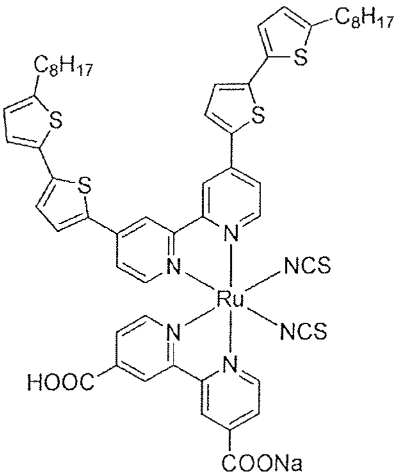

(Reference example)

(Reference example)

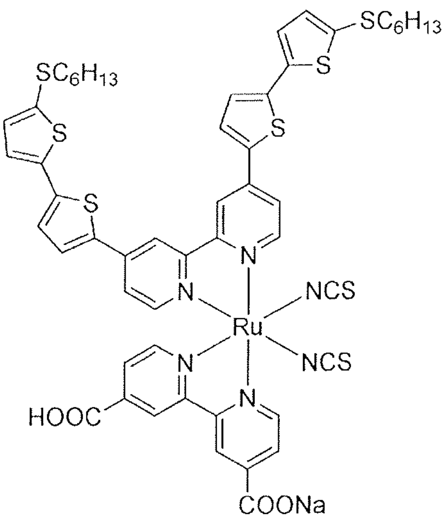

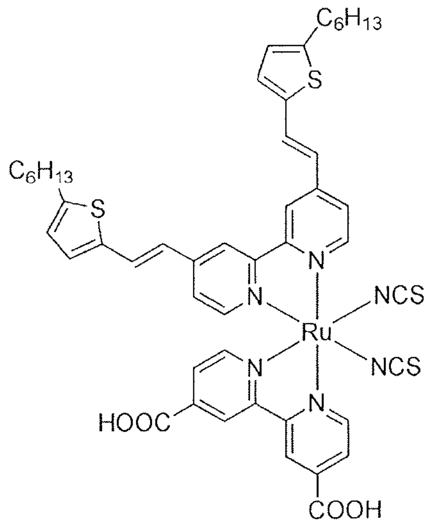

(Reference example)

(Reference example)

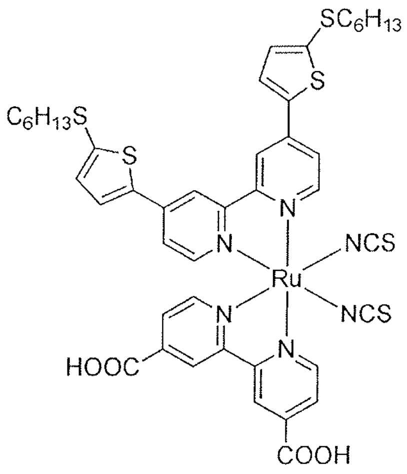

(Reference example)

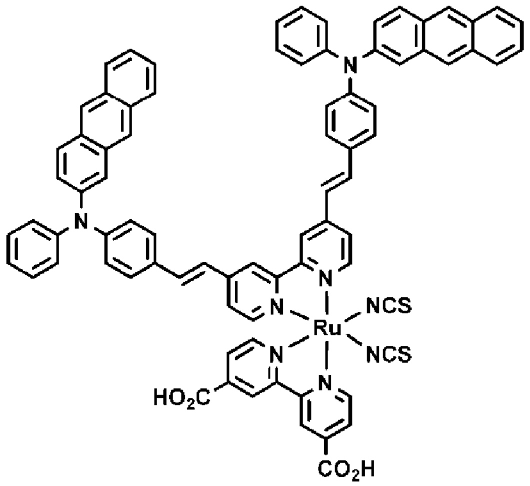

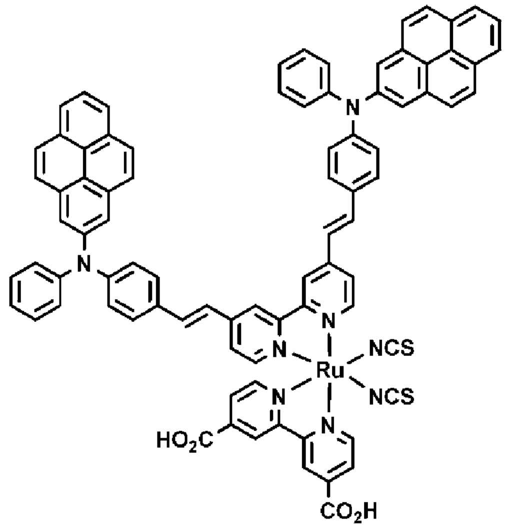

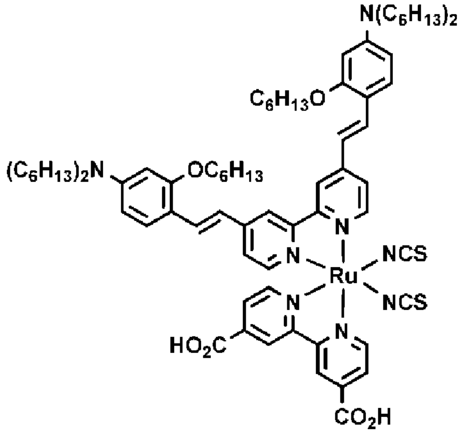

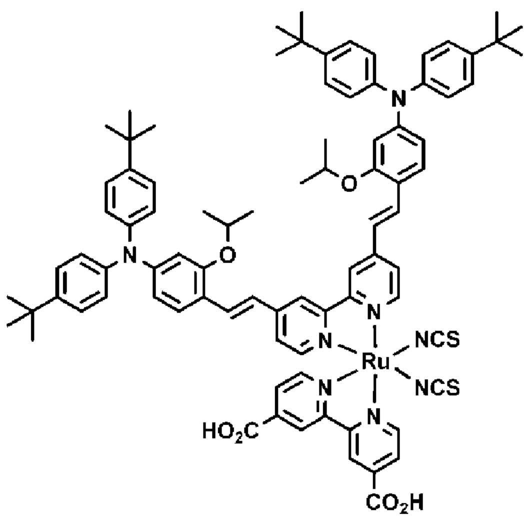

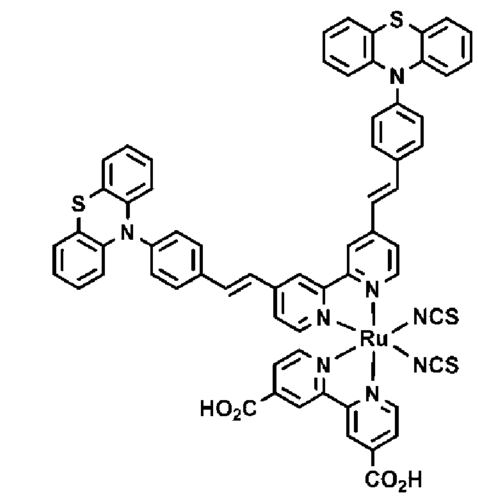

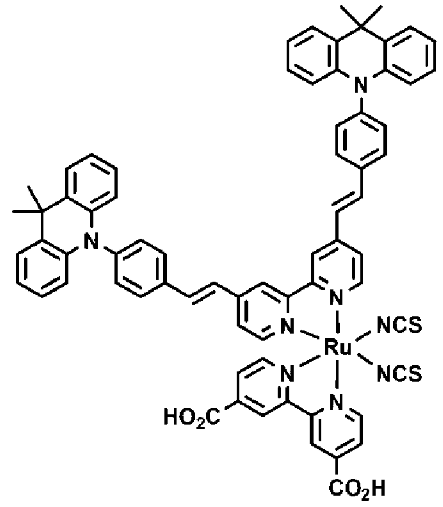

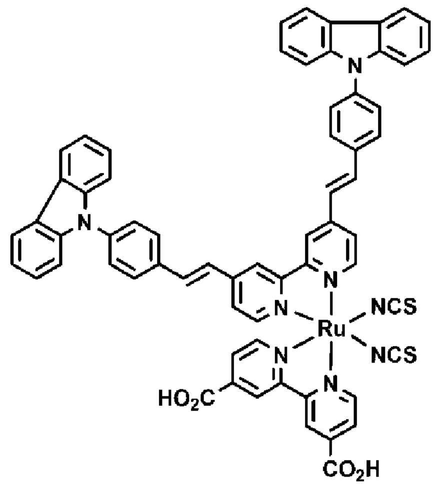

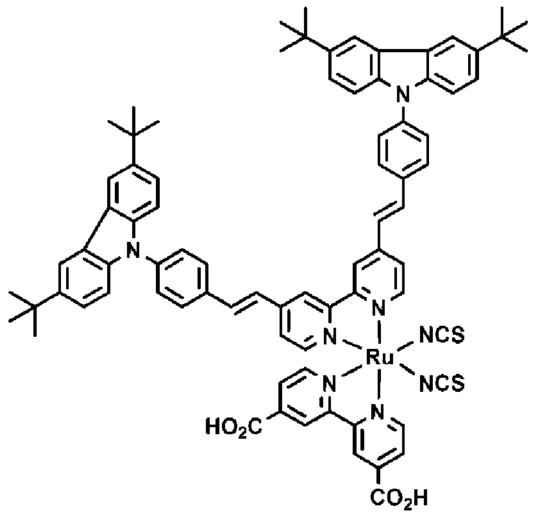

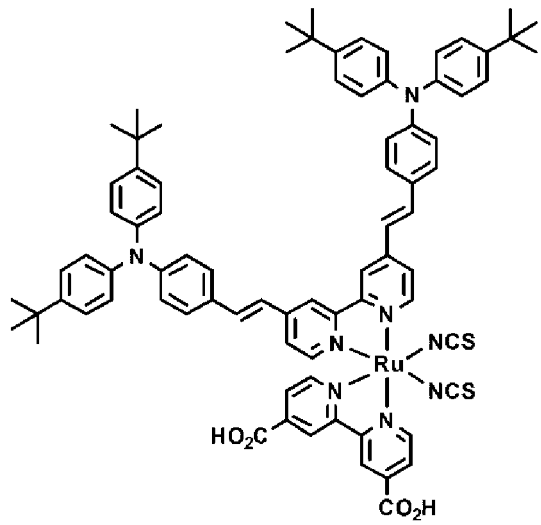

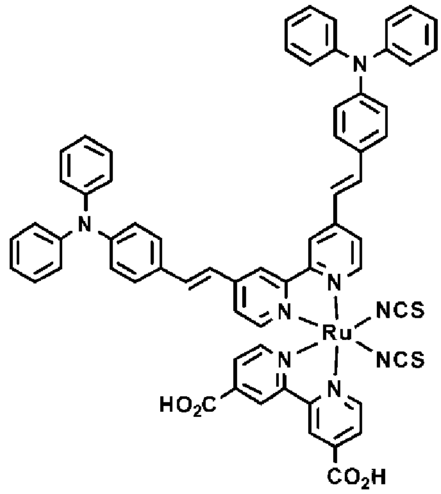

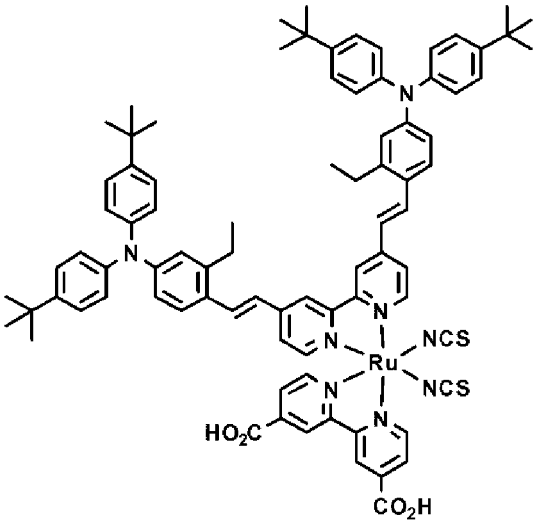

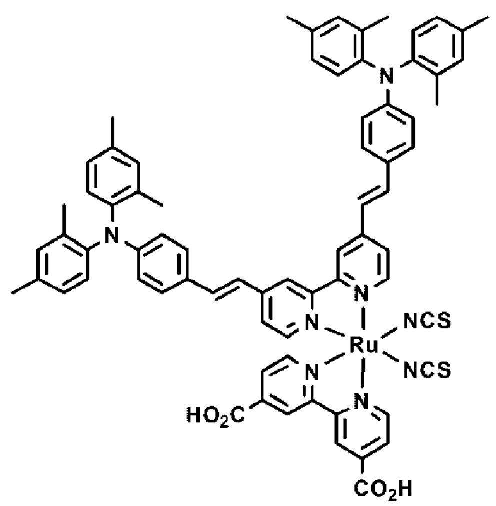

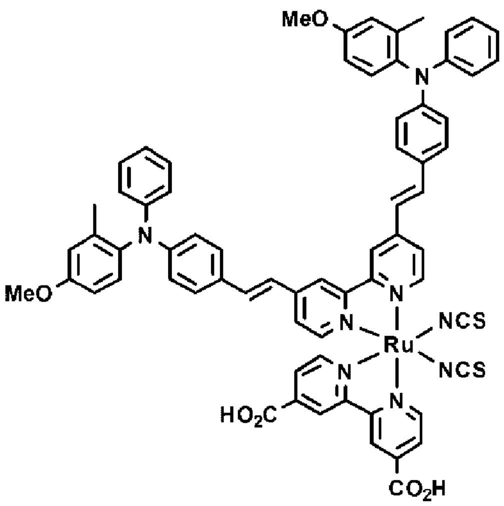

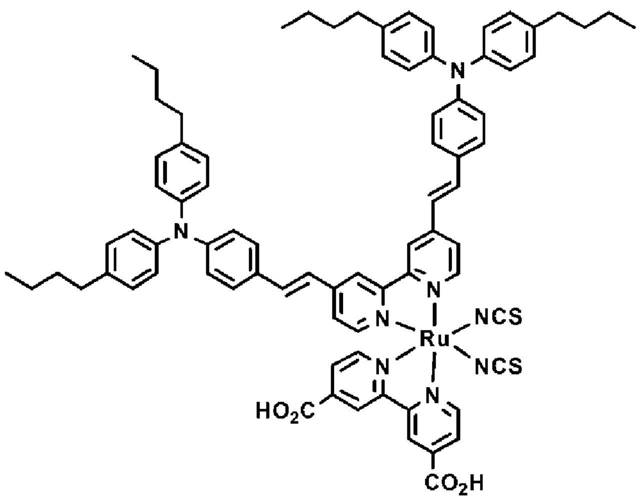

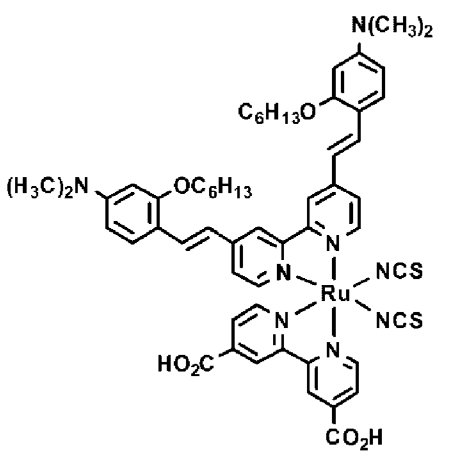

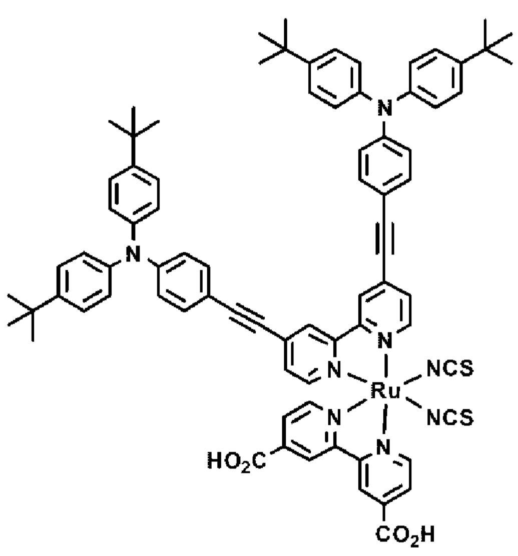

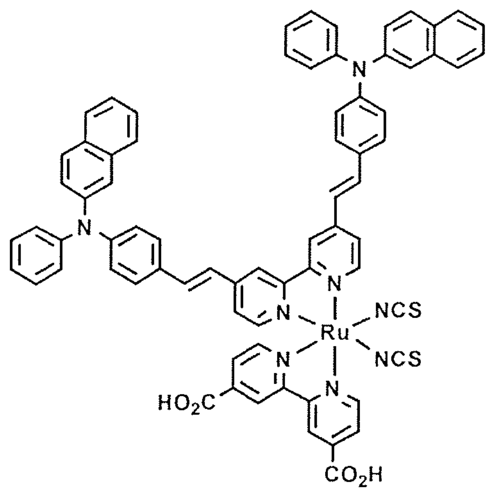

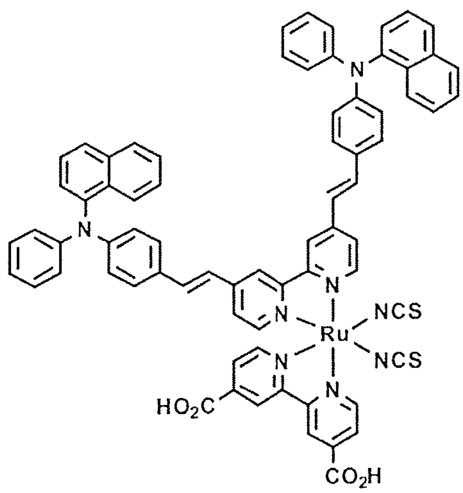

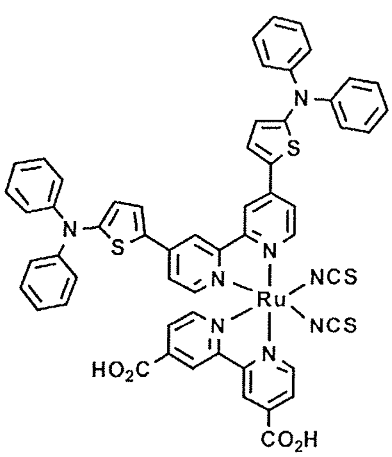

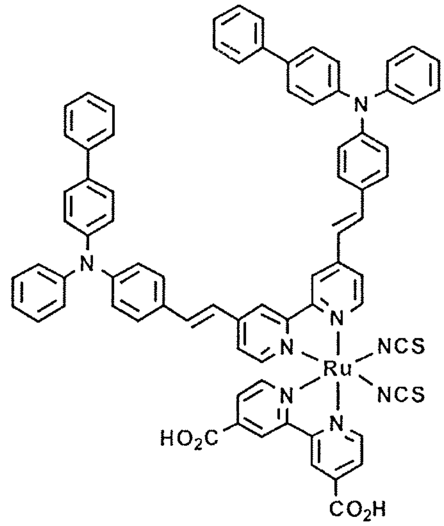

(Reference example)

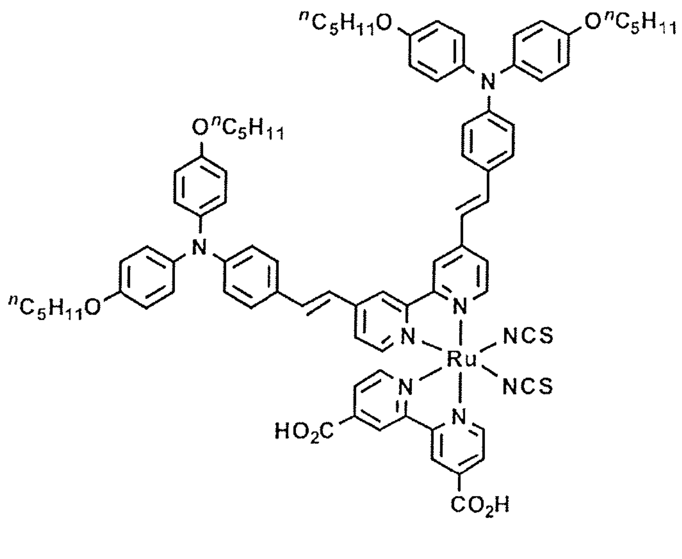

<Substituent Group $Z^R$>

Examples of the substituent in the present invention include the substituents selected from the following substituent group $Z^R$.

In the present specification, in a case where there is only a simple description of a substituent, reference is made to this substituent group $Z^R$. Further, in a case where each of the groups (for example, an alkyl group and an aryl group) is merely described, preferred ranges and specific examples for the corresponding group (for example, the alkyl group and the aryl group in $Z^R$) in the substituent group $Z^R$ are applied.

Examples of the groups included in the substituent group $Z^R$ include the following groups or the groups formed by the combination of a plurality of the following groups:

an alkyl group (preferably an alkyl group having 1 to 20 carbon atoms, and more preferably an alkyl group having 1 to 12 carbon atoms, for example, methyl, ethyl, isopropyl, n-butyl, t-butyl, pentyl, hexyl, heptyl, octyl, 1-ethylpentyl, 2-ethylhexyl, benzyl, 2-ethoxyethyl, and trifluoromethyl), an alkenyl group (preferably an alkenyl group having 2 to 20 carbon atoms, and more preferably an alkenyl group having 2 to 12 carbon atoms, for example, vinyl, allyl, butenyl, and oleyl), an alkynyl group (preferably an alkynyl group having 2 to 20 carbon atoms, and more preferably an alkynyl group having 2 to 12 carbon atoms, for example, ethynyl, butynyl, octynyl, and phenylethynyl), a cycloalkyl group (preferably a cycloalkyl group having 3 to 20 carbon atoms), an cycloalkenyl group (preferably a cycloalkenyl group having 5 to 20 carbon atoms), an aryl group (preferably an aryl group having 6 to 26 carbon atoms, for example, phenyl, 1-naphthyl, 4-methoxyphenyl, 2-chlorophenyl, 3-methylphenyl, difluorophenyl, and tetrafluorophenyl), a heterocyclic group (preferably a heterocyclic group having 2 to 20 carbon atoms, and more preferably a 5- or 6-membered heterocyclic group having at least one oxygen atom, sulfur atom, or nitrogen atom. The heterocycle encompasses an aromatic ring and an aliphatic ring. Examples of the aromatic heterocyclic group (for example, a heteroaryl group) include the following groups. For example, 2-pyridyl, 2-thienyl, 2-furanyl, 4-pyridyl, 2-imidazolyl, 2-benzimidazolyl, 2-thiazolyl, and 2-oxazolyl), an alkoxy group (preferably an alkoxy group having 1 to 20 carbon atoms, and more preferably an alkoxy group having 1 to 12 carbon atoms, for example, methoxy, ethoxy, isopropyloxy, hexyloxy, octyloxy, and benzyloxy), an alkenyloxy group (preferably an alkenyloxy group having 2 to 20 carbon atoms, and more preferably an alkenyloxy group having 2 to 12 carbon atoms), an alkynyloxy group (preferably an alkynyloxy group having 2 to 20 carbon atoms, and more preferably an alkynyloxy group 2 to 12 carbon atoms), a cycloalkyloxy group (preferably a cycloalkyloxy group having 3 to 20 carbon atoms), an aryloxy group (preferably an aryloxy group having 6 to 26 carbon atoms), a heterocyclic oxy group (preferably a heterocyclic oxy group having 2 to 20 carbon atoms),

an alkoxycarbonyl group (preferably an alkoxycarbonyl group having 2 to 20 carbon atoms), a cycloalkoxycarbonyl group (preferably a cycloalkoxycarbonyl group having 4 to 20 carbon atoms), an aryloxycarbonyl group (preferably an aryloxycarbonyl group having 6 to 20 carbon atoms), an amino group (preferably an amino group having 0 to 20 carbon atoms, including an alkylamino group, an alkenylamino group, an alkynylamino group, a cycloalkylamino group, a cycloalkenylamino group, an arylamino group, and a heterocyclic amino group, for example, amino, N,N-dimethylamino, N,N-diethylamino, N-ethylamino, N-allylamino, N-(2-propynyl)amino, N-cyclohexylamino, N-cyclohexenylamino, N,N-diphenylamino, anilino, pyridylamino, imidazolylamino, benzimidazolylamino, thiazolylamino, benzothiazolylamino, and triazinylamino), a sulfamoyl group (preferably a sulfamoyl group having 0 to 20 carbon atoms, with alkyl-, cycloalkyl-, and aryl-sulfamoyl groups being preferable), an acyl group (preferably an acyl group having 1 to 20 carbon atoms), an acyloxy group (preferably an acyloxy group having 1 to 20 carbon atoms), a carbamoyl group (preferably a carbamoyl group having 1 to 20 carbon atoms, with alkyl-, cycloalkyl-, and aryl-carbamoyl groups being preferable),

an acylamino group (preferably an acylamino group having 1 to 20 carbon atoms), a sulfonamido group (preferably a sulfonamido group having 0 to 20 carbon atoms, with alkyl-, cycloalkyl-, and aryl-sulfonamido groups being preferable), an alkylthio group (preferably an alkylthio group having 1 to 20 carbon atoms, and more preferably an alkylthio group having 1 to 12 carbon atoms, for example, methylthio, ethylthio, isopropylthio, pentylthio, hexylthio, octylthio, and benzylthio), a cycloalkylthio group (preferably a cycloalkylthio group having 3 to 20 carbon atoms), an arylthio group (preferably an arylthio group having 6 to 26 carbon atoms), an alkyl-, cycloalkyl-, and aryl-sulfonyl group (preferably a sulfonyl group having 1 to 20 carbon atoms),

a silyl group (preferably a silyl group having 1 to 20 carbon atoms, with alkyl-, aryl-, alkoxy-, and aryloxy-substituted silyl groups being preferable), a silyloxy group (preferably a silyloxy group having 1 to 20 carbon atoms, with alkyl-, aryl-, alkoxy-, and aryloxy-substituted silyloxy groups being preferable), a hydroxyl group, a cyano group, a nitro group, and a halogen atom (for example, a fluorine atom, a chlorine atom, a bromine atom, and iodine atom).

Examples of the group selected from the substituent group $Z^R$ more preferably include an alkyl group, an alkenyl group, a cycloalkyl group, an aryl group, a heterocyclic group, an alkoxy group, a cycloalkoxy group, an aryloxy group,

an alkoxycarbonyl group, a cycloalkoxycarbonyl group, an amino group, an acylamino group, a cyano group, and a halogen atom, and particularly preferably include an alkyl group, an alkenyl group, a heterocyclic group, an alkoxy group, an alkoxycarbonyl group, an amino group, an acylamino group, and a cyano group.

When the compound, the substituent, or the like includes an alkyl group, an alkenyl group, or the like, these may be linear or branched, and substituted or unsubstituted. In addition, when the compound, the substituent, or the like includes an aryl group, a heterocyclic group, or the like, these may be a monocycle or a fused ring, and may be substituted or unsubstituted.

Subsequently, the photoelectric conversion element and the dye-sensitized solar cell, in which the ruthenium complex dye of the present invention is used as a sensitizing dye, will be described.

[Photoelectric Conversion Element and Dye-Sensitized Solar Cell]

The photoelectric conversion element using the ruthenium complex dye of the present invention has an electrically conductive support, a photoconductor layer including an electrolyte, a charge transfer layer including an electrolyte, and a counter electrode (opposite electrode). The photoconductor layer, the charge transfer layer, and the counter electrode are provided in this order on the electrically conductive support.

In the photoelectric conversion element using the ruthenium complex dye of the present invention, at least a portion of the semiconductor fine particles forming the photoconductor layer carries the ruthenium complex dye of the present invention as a sensitizing dye. Here, the aspect in which the ruthenium complex dye is carried onto the surface of the semiconductor fine particles encompasses an aspect in which the ruthenium complex dye is deposited on the surface of the semiconductor fine particles, an aspect in which the ruthenium complex dye is adsorbed onto the surface of the semiconductor fine particles, and a mixture of the aspects. The adsorption includes chemical adsorption and physical adsorption, with the chemical adsorption being preferable.

The semiconductor fine particles may carry other metal complex dyes, in combination with the ruthenium complex dye of the present invention.

Moreover, the photoconductor layer includes an electrolyte. The electrolyte included in the photoconductor layer may be the same as or different from the electrolyte included in the charge transfer layer, but they are preferably the same.

The photoelectric conversion element using the ruthenium complex dye of the present invention is not particularly limited in terms of configurations other than the configuration defined in the present invention, and may adopt known configurations regarding photoelectric conversion elements. The respective layers constituting the photoelectric conversion element using the ruthenium complex dye of the present invention are designed depending on purposes, and may be formed into, for example, a single layer or multiple layers. Further, layers other than the layers may be included, as necessary.

Hereinafter, preferred embodiments of the photoelectric conversion element and the dye-sensitized solar cell, each using the ruthenium complex dye of the present invention as a sensitizing dye, will be described.

A system 100 shown in Fig. 1 is a system in which a photoelectric conversion element 10 in the first aspect, using the ruthenium complex dye of the present invention, is applied in cell uses where an operating means M (for example, an electric motor) in an external circuit 6 is forced to work.

The photoelectric conversion element 10 includes semiconductor fine particles 22 sensitized by carrying an electrically conductive support 1 and a dye (the ruthenium complex dye of the present invention) 21, a photoconductor layer 2 including an electrolyte between the semiconductor fine particles 22, a charge transfer layer 3 that is a hole transport layer, and a counter electrode 4.

In the photoelectric conversion element 10, the light-receiving electrode 5 has the electrically conductive support 1 and the photoconductor layer 2, and functions as a functional electrode.

In the system 100 in which the photoelectric conversion element 10 is applied, light incident to the photoconductor layer 2 excites the ruthenium complex dye 21. The excited ruthenium complex dye 21 has electrons having high energy, and these electrons are transferred from the ruthenium complex dye 21 to a conduction band of the semiconductor fine particles 22, and further reach the electrically conductive support 1 by diffusion. At this time, the ruthenium complex dye 21 is in an oxidized form (cation). While the electrons reaching the electrically conductive support 1 work in an external circuit 6, they reach the oxidized form of the ruthenium complex dye 21 through the counter electrode 4 and the charge transfer layer 3, and reduce the oxidized form, whereby the system 100 functions as a solar cell.

A dye-sensitized solar cell 20 shown in Fig. 2 is constituted with a photoelectric conversion element in the second aspect, using the ruthenium complex dye of the present invention.

With respect to the photoelectric conversion element shown in Fig. 1, the photoelectric conversion element which becomes the dye-sensitized solar cell 20 is different in the configurations of the electrically conductive support 41 and the photoconductor layer 42, and also differs in that it has a spacer, but except for these, has the same configuration as the photoelectric conversion element 10 shown in Fig. 1. That is, the electrically conductive support 41 has a bilayered

structure including a substrate 44 and a transparent electrically-conductive film 43 which is formed on the surface of the substrate 44. Further, the photoconductor layer 42 has a bilayered structure including a semiconductor layer 45 and a light-scattering layer 46 which is formed adjacent to the semiconductor layer 45. A spacer S is provided between the electrically conductive support 41 and the counter electrode 48. In the dye-sensitized solar cell 20, 40 is a light-receiving electrode and 47 is a charge transfer layer.

The dye-sensitized solar cell 20, similar to the system 100 in which the photoelectric conversion element 10 is applied, functions as a solar cell by light incident on the photoconductor layer 42.

The photoelectric conversion element and the dye-sensitized solar cell, using the ruthenium complex dye of the present invention, are not limited to the above preferred aspects, and the configuration of each of the aspects can be combined as appropriate within a range not departing from the scope of the present invention.

In the present invention, the materials and the respective members for use in the photoelectric conversion element or the dye-sensitized solar cell can be prepared by ordinary methods. Reference can be made to, for example, US4927721A, US4684537A, US5084365A, US5350644A, US5463057A, US5525440A, JP1995-249790A (JP-H07-249790A), JP2001-185244A, JP2001-210390A, JP2003-217688A, JP2004-220974A, and JP2008-135197A.

Next, preferred aspects of the main members of the photoelectric conversion element and the dye-sensitized solar cell will be described in more detail.

<Electrically Conductive Support>

The electrically conductive support is not particularly limited as long as it has electrical conductivity and is capable of supporting a photoconductor layer 2 or the like. The electrically conductive support is preferably an electrically conductive support 1 formed of a material having electrical conductivity, such as a metal, or an electrically conductive support 41 having a glass or plastic substrate 44 and a transparent electrically-conductive film 43 formed on the surface of the substrate 44.

Among them, the electrically conductive support 41 having the transparent electrically-conductive film 43 of a metal oxide on the surface of the substrate 44 is preferable. Such the electrically conductive support 41 is obtained by applying an electrically conductive metal oxide onto the surface of the substrate 44 to form a transparent electrically-conductive film 43. Examples of the substrate 44 formed of plastics include the transparent polymer films described in paragraph No. 0153 of JP2001-291534A. Further, as a material which forms the substrate 44, ceramics (JP2005-135902A) or electrically conductive resins (JP2001-160425A) can be used, in addition to glass and plastics. As the metal oxide, tin oxide (TO) is preferable, and indium-tin oxide (tin-doped indium oxide; ITO), and fluorine-doped tin oxide such as tin oxide which has been doped with fluorine (FTO) are particularly preferable. In this case, the coating amount of the metal oxide is preferably 0.1 to 100 g, per square meter of the surface area of the substrate 44. In a case of using the electrically conductive support 41, it is preferable that light is incident from the substrate 44.

It is preferable that the electrically conductive supports 1 and 41 are substantially transparent. The expression, "substantially transparent", means that the transmittance of light (at a wavelength of 300 to 1,200 nm) is 10% or more, preferably 50% or more, and particularly preferably 80% or more.

The thickness of the electrically conductive supports 1 and 41 is not particularly limited, but is preferably 0.05 μm to 10 mm, more preferably 0.1 μm to 5 mm, and particularly preferably 0.3 μm to 4 mm.

In a case of having a transparent electrically-conductive film 43, the thickness of the transparent electrically-conductive film 43 is preferably 0.01 to 30 μm, more preferably 0.03 to 25 μm, and particularly preferably 0.05 to 20 μm.

The electrically conductive supports 1 and 41 may be provided with a light management function at the surface, and may have, for example, the anti-reflection film having a high refractive index film and a low refractive index oxide film alternately laminated described in JP2003-123859A, and the light guide function described in JP2002-260746A on the surface.

<Photoconductor Layer>

As long as the photoconductor layer has semiconductor fine particles 22 carrying the ruthenium complex dye 21 of the present invention, and an electrolyte, it is not particularly limited in terms of other configurations. Preferred examples thereof include the photoconductor layer 2 and the photoconductor layer 42.

- Semiconductor Fine Particles (Layer Formed by Semiconductor Fine Particles) -

The semiconductor fine particles 22 are preferably fine particles of chalcogenides of metals (for example, oxides, sulfides, and selenides) or of compounds having perovskite type crystal structures. Preferred examples of the chalcogenides of metals include oxides of titanium, tin, zinc, tungsten, zirconium, hafnium, strontium, indium, cerium, yttrium, lanthanum, vanadium, niobium, or tantalum, cadmium sulfide, and cadmium selenide. Preferred examples of

the compounds having perovskite type crystal structures include strontium titanate and calcium titanate. Among these, titanium oxide (titania), zinc oxide, tin oxide, and tungsten oxide are particularly preferable.

Examples of the crystal structure of titania include structures of an anatase type, a brookite type, and a rutile type, with the structures of an anatase type and a brookite type being preferable. Titania nanotube·nanowires·nanorods may be used singly or in mixture with titania fine particles.

The particle diameter of the semiconductor fine particles 22 is expressed in terms of an average particle diameter using a diameter when a projected area is converted into a circle, and is preferably 0.001 to 1 μm as primary particles, and 0.01 to 100 μm as an average particle diameter of dispersions. Examples of the method for coating the semiconductor fine particles 22 on the electrically conductive supports 1 or 41 include a wet method, a dry method, and other methods.

It is preferable that the semiconductor fine particles 22 have a large surface area so that they may adsorb a large amount of the dye 21. For example, in a state where the semiconductor fine particles 22 are coated on the electrically conductive support 1 or 41, the surface area is preferably 10 times or more, and more preferably 100 times or more, with respect to the projected area. The upper limit of this value is not particularly limited, and the upper limit is usually approximately 5,000 times.

Although a preferred thickness of the layer formed by the semiconductor fine particles may vary depending on the utility of the photoelectric conversion element, the thickness is typically 0.1 to 100 μm. In a case of using the photoelectric conversion element as a dye-sensitized solar cell, the thickness of the layer is more preferably 1 to 50 μm, and still more preferably 3 to 30 μm.

It is preferable that the semiconductor fine particles 22 may be calcined at a temperature of 100°C to 800°C for 10 minutes to 10 hours after being applied on the electrically conductive support 1 or 41, so as to bring about cohesion of the particles. In a case of using glass as a material for the electrically conductive support 1 or the substrate 44 is used, the film-forming temperature is preferably 60°C to 600°C.

The coating amount of the semiconductor fine particles 22 per square meter of the surface area of the electrically conductive support 1 or 41 is preferably 0.5 to 500 g, and more preferably 5 to 100 g.

It is preferable that a short circuit-preventing layer is formed between the electrically conductive support 1 or 41 and the photoconductor layer 2 or 42 so as to prevent reverse current due to a direct contact between the electrolyte included in the photoconductor layer 2 or 42 and the electrically conductive support 1 or 41.

In addition, it is preferable to use a spacer S (see Fig. 2) or a separator, so as to prevent contact between the light-receiving electrode 5 or 40 and the counter electrode 4 or 48.

- Dye -

In the photoelectric conversion element 10 and the dye-sensitized solar cell 20, at least one kind of the above-mentioned ruthenium complex dye of the present invention is used as a sensitizing dye.

In the present invention, examples of the dye that can be used in combination with the ruthenium complex dye of the present invention include a squarylium cyanine dye, an organic dye, a porphyrin dye, and a phthalocyanine dye.

As the dye which can be used in combination, the squarylium cyanine dye or the organic dye is preferable.

The overall amount of the dye to be used is preferably 0.01 to 100 millimoles, more preferably 0.1 to 50 millimoles, and particularly preferably 0.1 to 10 millimoles, per square meter of the surface area of the electrically conductive support 1 or 41. Further, the amount of the dye 21 to be adsorbed onto the semiconductor fine particles 22 is preferably 0.001 to 1 millimole, and more preferably 0.1 to 0.5 millimoles, with respect to 1 g of the semiconductor fine particles 22. By setting the amount of the dye to such a range, the sensitization effect on the semiconductor fine particles 22 is sufficiently obtained.

In a case where the ruthenium complex dye of the present invention is used in combination with another dye, the ratio of the mass of the ruthenium complex dye of the present invention/the mass of another dye is preferably 95/5 to 10/90, more preferably 95/5 to 50/50, still more preferably 95/5 to 60/40, particularly preferably 95/5 to 65/35, and most preferably 95/5 to 70/30.

After the ruthenium complex dye of the present invention is carried onto the semiconductor fine particles 22, the surface of the semiconductor fine particles 22 may be treated using an amine compound. Preferred examples of the amine compound include pyridine compounds (for example, 4-t-butylpyridine and polyvinylpyridine). These may be used as they are in a case where they are liquids, or may be used in a state where they are dissolved in an organic solvent.

- Co-Adsorbent -

In the photoelectric conversion element using the ruthenium complex dye of the present invention, it is preferable to use a co-adsorbent together with the ruthenium complex dye of the present invention or with another dye to be used in combination, if necessary. Such a co-adsorbent which includes a co-adsorbent having at least one acidic group (preferably a carboxyl group or a salt thereof) is preferable, and examples thereof include a fatty acid and a compound

having a steroid skeleton.

The fatty acid may be a saturated fatty acid or an unsaturated fatty acid, and examples thereof include butanoic acid, hexanoic acid, octanoic acid, decanoic acid, hexadecanoic acid, dodecanoic acid, palmitic acid, stearic acid, oleic acid, linoleic acid, and linolenic acid.

Examples of the compound having a steroid skeleton include cholic acid, glycocholic acid, chenodeoxycholic acid, hyocholic acid, deoxycholic acid, lithocholic acid, and ursodeoxycholic acid, among which cholic acid, deoxycholic acid, and chenodeoxycholic acid are preferable; and deoxycholic acid are more preferable.

As the co-adsorbent, the co-adsorbent represented by Formula (CA) described in paragraph Nos. 0125 to 0129 of JP2014-82187A is preferable.

By making the co-adsorbent adsorbed onto the semiconductor fine particles 22, the co-adsorbent exhibits an effect of suppressing the inefficient association of the metal complex dye and an effect of preventing reverse electron transfer from the surface of the semiconductor fine particles to the redox system in the electrolyte. The amount of the co-adsorbent to be used is not particularly limited, and from the viewpoint of exhibiting the above effects effectively, the amount is preferably 1 to 200 moles, more preferably 10 to 150 moles, and particularly preferably 20 to 50 moles, with respect to 1 mole of the ruthenium complex dye.

- Light-Scattering Layer -

In the photoelectric conversion element using the ruthenium complex dye of the present invention, the light-scattering layer is different from the semiconductor layer that it has a function of scattering incidence rays.

In the dye-sensitized solar cell 20, the light-scattering layer 46 preferably contains rod-shaped or plate-shaped metal oxide fine particles. Examples of the metal oxide to be used in the light-scattering layer 46 include the chalcogenides (oxides) of the metals, described as the compound that forms the semiconductor fine particles. In a case of providing the light-scattering layer 46, it is preferable that the thickness of the light-scattering layer is set to 10% to 50% of the thickness of the photoconductor layer 42.

The light-scattering layer 46 is preferably the light-scattering layer described in JP2002-289274A.

<Charge Transfer Layer>

The charge transfer layers 3 and 47 used in the photoelectric conversion element using the ruthenium complex dye of the present invention are layers having a function of complementing electrons for the oxidized forms of the dye 21, and are provided between the light-receiving electrode 5 or 40 and the counter electrode 4 or 48.

The charge transfer layers 3 and 47 include electrolytes. Here, the expression, "the charge transfer layer includes an electrolyte", is used to inclusion of both of an aspect in which the charge transfer layer consists of only electrolytes and an aspect in which the charge transfer layer consists of electrolytes and materials other than the electrolytes.

The charge transfer layers 3 and 47 may be any of a solid form, a liquid form, a gel form, or a mixture of these forms.

- Electrolyte -

Examples of the electrolyte include a liquid electrolyte having a redox pair dissolved in an organic solvent, and a so-called gel electrolyte in which a molten salt containing a redox pair and a liquid having a redox pair dissolved in an organic solvent are impregnated in a polymer matrix. Among those, from the viewpoint of photoelectric conversion efficiency, a liquid electrolyte is preferable.

Examples of the redox pair include a combination of iodine and an iodide (preferably an iodide salt or an iodide ionic liquid, and preferably lithium iodide, tetrabutylammonium iodide, tetrapropylammonium iodide, and methylpropylimidazolium iodide), a combination of an alkylviologen (for example, methylviologen chloride, hexylviologen bromide, and benzylviologen tetrafluoroborate) and a reductant thereof, a combination of a polyhydroxybenzene (for example, hydroquinone and naphthohydroquinone) and an oxidized form thereof, a combination of a divalent iron complex and a trivalent iron complex (for example, a combination of potassium ferricyanide and potassium ferrocyanide), and a combination of a divalent cobalt complex and a trivalent cobalt complex. Among these, a combination of iodine and an iodide, or a combination of a divalent cobalt complex and a trivalent cobalt complex is preferable, and a combination of iodine and an iodide is particularly preferable.

As the cobalt complex, the complex represented by Formula (CC) described in paragraph Nos. 0144 to 0156 of JP2014-82189A is preferable.

In a case where a combination of iodine and iodide is used as an electrolyte, it is preferable that a nitrogen-containing aromatic cation iodide salt as a 5- or 6-membered ring is additionally used.

The organic solvent which is used in a liquid electrolyte and a gel electrolyte is not particularly limited, but is preferably an aprotic polar solvent (for example, acetonitrile, propylene carbonate, ethylene carbonate, dimethylformamide, dimethylsulfoxide, sulfolane, 1,3-dimethylimidazolinone, and 3-methyloxazolidinone).

In particular, as the organic solvent which is used for a liquid electrolyte, a nitrile compound, an ether compound, an ester compound, or the like is preferable, a nitrile compound is more preferable, and acetonitrile or methoxypropionitrile is particularly preferable.

With regard to the molten salt or the gel electrolyte, those described in paragraph No. 0205 and paragraph Nos. 0208 to 0213 of JP2014-139931A are preferable.

The electrolyte may contain aminopyridine compounds, benzimidazole compounds, aminotriazole compounds, aminothiazole compounds, imidazole compounds, aminotriazine compounds, urea compounds, amide compounds, pyrimidine compounds, and heterocycles not including nitrogen, in addition to pyridine compounds such as 4-t-butylpyridine, as an additive.

Moreover, a method of controlling the moisture content of the electrolytic solution may be employed in order to enhance the photoelectric conversion efficiency. Preferred examples of the method of controlling the moisture content include a method of controlling the concentration, and a method of adding a dehydrating agent. The moisture content of the electrolytic solution is preferably adjusted to 0% to 0.1% by mass.

Iodine can also be used as a clathrate compound of iodine with cyclodextrin. Furthermore, a cyclic amidine may be used, or an antioxidant, a hydrolysis inhibitor, a decomposition inhibitor, or zinc iodide may be added.

A solid-state charge transport layer such as a p-type semiconductor or a hole transport material, for example, CuI or CuNCS, may be used in place of the liquid electrolyte and the quasi-solid-state electrolyte as described above. Moreover, the electrolytes described in Nature, vol. 486, p. 487 (2012) and the like may also be used. For a solid-state charge transport layer, an organic hole transport material may be used. As the organic hole transport material, those described in paragraph No. 0214 of JP2014-139931A are preferable.

The redox pair serves as an electron carrier, and accordingly, it is preferably contained at a certain concentration. The concentration of the redox pair in total is preferably 0.01 mol/L or more, more preferably 0.1 mol/L or more, and particularly preferably 0.3 mol/L or more. In this case, the upper limit is not particularly limited, but is usually approximately 5 mol/L.

<Counter Electrode>

The counter electrodes 4 and 48 preferably work as a positive electrode in a dye-sensitized solar cell. The counter electrodes 4 and 48 usually have the same configurations as the electrically conductive support 1 or 41, but in a configuration in which strength is sufficiently maintained, a substrate 44 is not necessarily required. A preferred structure of the counter electrodes 4 and 48 is a structure having a high charge collecting effect. At least one of the electrically conductive support 1 or 41 and the counter electrode 4 or 48 should be substantially transparent so that light may reach the photoconductor layers 2 and 42. In the dye-sensitized solar cell of the present invention, the electrically conductive support 1 or 41 is preferably transparent to allow sunlight to be incident from the side of the electrically conductive support 1 or 41. In this case, the counter electrodes 4 and 48 more preferably have light reflecting properties. As the counter electrodes 4 and 48 of the dye-sensitized solar cell, glass or plastics on which a metal or an electrically conductive oxide is deposited are preferable, and glass on which platinum is deposited is particularly preferable. In the dye-sensitized solar cell, a lateral side of the cell is preferably sealed with a polymer, an adhesive, or the like in order to prevent evaporation of components.

[Method for Producing Photoelectric Conversion Element and Dye-Sensitized Solar Cell]

The photoelectric conversion element and the dye-sensitized solar cell of the present invention can be produced using a dye solution (the dye solution of the present invention) containing the ruthenium complex dye of the present invention and a solvent.

Such a dye solution is formed by dissolving the ruthenium complex dye of the present invention in a solvent, and may also include other components such as the co-adsorbent, if necessary.

Examples of the solvent to be used include the solvents described in JP2001-291534A, but are not particularly limited thereto. In the present invention, an organic solvent is preferable, and an alcohol solvent, an amide solvent, a nitrile solvent, a hydrocarbon solvent, and a mixed solvent of two or more kinds of these solvents are more preferable. As the mixed solvent, a mixed solvent of an alcohol solvent and a solvent selected from an amide solvent, a nitrile solvent, and a hydrocarbon solvent is preferable; a mixed solvent of an alcohol solvent and an amide solvent, a mixed solvent of an alcohol solvent and a hydrocarbon solvent, and a mixed solvent of an alcohol solvent and a nitrile solvent are more preferable; and a mixed solvent of an alcohol solvent and an amide solvent, and a mixed solvent of an alcohol solvent and a nitrile solvent are particularly preferable. Specifically, a mixed solvent of at least one of methanol, ethanol,

propanol, or butanol, and at least one of dimethylformamide or dimethylacetamide, and a mixed solvent of at least one of methanol, ethanol, propanol, or t-butanol, and acetonitrile are preferable.

The dye solution preferably contains a co-adsorbent, and as the co-adsorbent, the aforementioned co-adsorbent is preferable.

Here, the dye solution of the present invention is preferably a dye solution in which the concentrations of the ruthenium complex dye and the co-adsorbent have been adjusted so that the solution can be used as it is during the production of the photoelectric conversion element or the dye-sensitized solar cell. In the present invention, the dye solution of the present invention preferably contains 0.001% to 0.1% by mass of the ruthenium complex dye of the present invention. The amount of the co-adsorbent to be used is as described above.

For the dye solution, it is preferable to adjust the moisture content, and thus in the present invention, the moisture content is preferably adjusted to 0% to 0.1% by mass.

It is preferable to manufacture a photoconductor layer by carrying the ruthenium complex dye or a dye including the same on the surface of the semiconductor fine particles, using the dye solution. That is, the photoconductor layer is preferably formed by applying (including a dip method) the dye solution onto the semiconductor fine particles provided on the electrically conductive support, followed by drying and curing.

By further providing a charge transfer layer, a counter electrode, or the like for a light-receiving electrode including the photoconductor layer as manufactured above, the photoelectric conversion element of the present invention can be obtained.

The dye-sensitized solar cell is produced by connecting an external circuit 6 with the electrically conductive support 1 and the counter electrode 4 of the photoelectric conversion element manufactured as above.

EXAMPLES

Hereinafter, the present invention will be described in more detail, based on Examples, but the present invention is not limited thereto.

[Preparation Example 1] Preparation of Ruthenium Complex Dye

For Dye-1 to Dye-4 having the structures shown below, a ruthenium complex dye having a desired water content was prepared by adjusting the water content of a solvent used in crystallization or the drying conditions (time, a temperature, a degree of pressure reduction in the drying under reduced pressure, or the air volume or humidity in the blast drying) of crystals.

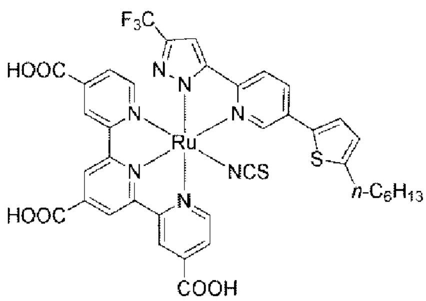

Dye-1

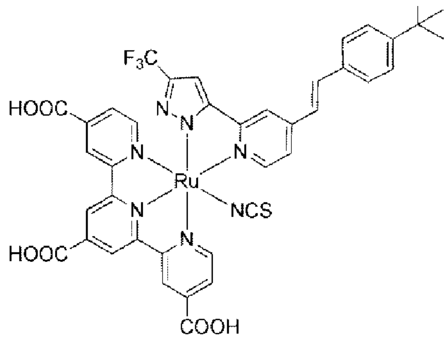

Dye-2

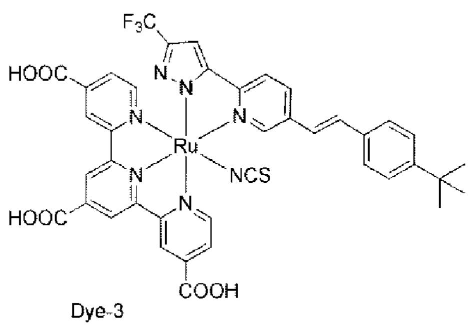

Dye-3

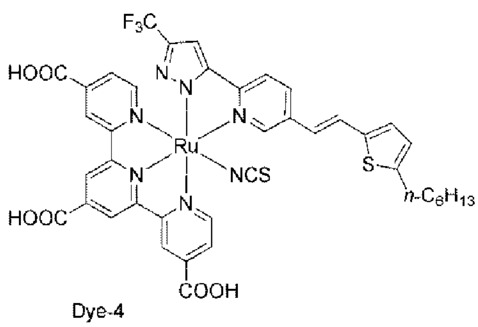

Dye-4

<Preparation of Dye-1>

Dye-1 was prepared by the following scheme. In the following scheme, Ph represents phenyl and Et represents ethyl.

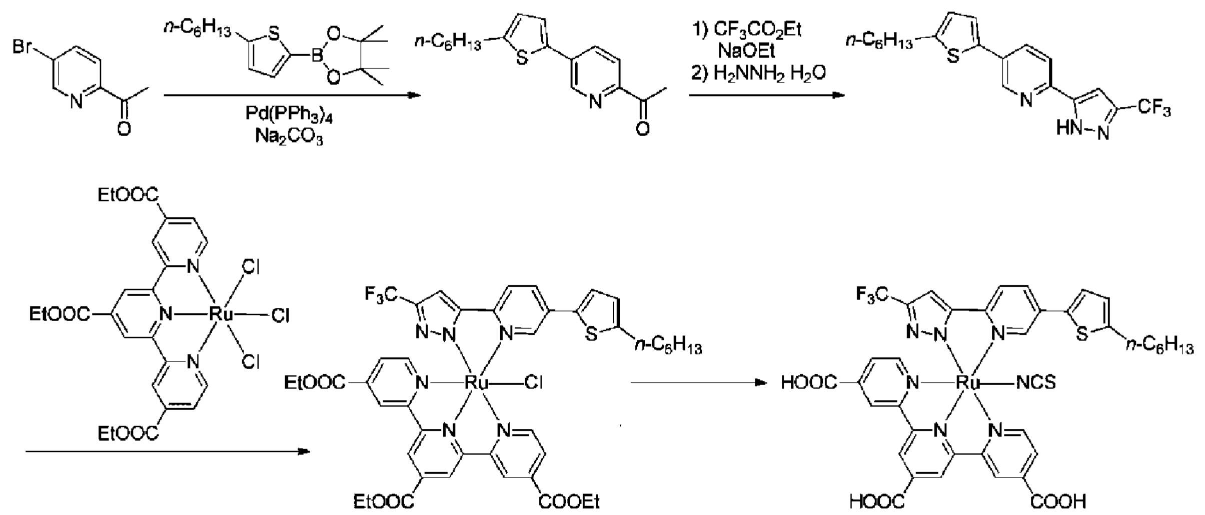


Dye-1

That is, Dye-1 was prepared with reference to the method for preparing PRT-21, described in Journal of Materials Chemistry A, 2014, Vol. 2, pp. 17618 to 17627, and Electronic supplementary information in the same document. Drying of Dye-1 obtained by the scheme was carried out at 40°C under reduced pressure (0.001 atm), and continued until a decrease in weight could not be observed even when the drying was kept for 5 hours, Dye-1 having a water content 0.11% by mass was obtained. Further, Dye-1 having the water content shown in Table 2 below was prepared by regulating the temperature (25°C to 40°C), the pressure (normal pressure to 0.001 atm), and the time in the drying.

<Measurement of Water Content>

For the water content of the ruthenium complex dye, blast drying was continued for 1 hour, using dry air (with a humidity of 20% or less) at 25°C in the state where 100 mg of a ruthenium complex dye to be subjected to measurement is spread across a Petri dish having a diameter of 10 cm (the drying treatment in paragraph [0017]) to remove the adhering water. Further, the resultant was dissolved in 5 g of super-dehydrated N,N-dimethylformamide (DMF) (manufactured by Wako Pure Chemical Industries, Ltd.) and the moisture amount was measured by a Karl Fischer method (coulometric titration) in accordance with JIS standard K0113. A moisture amount was measured using one measured only with super-dehydrated DMF as a blank, and the water content (% by mass) was determined, based on the difference between the two moisture amounts.

Dye-2 is PRT4 described in US2012/0111410A1, and was prepared with reference to the method described in the preparation method described in the same publication. Further, Dye-3 was also prepared in accordance with the method for preparing PRT4.

Dye-4 was also prepared in accordance with the method for preparing Dye1 described in JP2014-209578A.

For Dye-2 to Dye-4, in the same manner as for Dye1, a ruthenium complex dye having the water contents shown in Table 2 below was formed.

The mass spectral results of Dye-1 to Dye-4 prepared above were summarized in Table 1 below.

[Table 1]

| Ruthenium complex dye | m/Z (ESI-MS) |
|---|---|
| Dye-1 | 904.1 (MH+) |
| Dye-2 | 896.1 (MH+) |
| Dye-3 | 896.1 (MH+) |
| Dye-4 | 930.1 (MH+) |

[Test Example 1] Adsorption Rate

Using the ruthenium complex dye having a specific water content, prepared in Preparation Examples, the adsorption rate onto the surface of semiconductor fine particles was evaluated. For evaluation of the adsorption rate, titanium dioxide was used as the semiconductor fine particles, and the adsorption rate of the ruthenium complex dye onto the surface of titanium dioxide was used as an index.
The adsorption rate of the ruthenium complex dye was calculated, using a Quartz Crystal microbalance with Dissipation monitoring (QCM-D) intermolecular interaction measuring apparatus E1 (manufactured by Meiwafosis).
A titania paste A "18NR-T" was screen-printed on a gold sensor (manufactured by Meiwafosis K. K.) for use in QCM-D (film thickness: 20 μm). By calcining the printed gold sensor at 450°C for 1 hour in the air, a gold sensor having a semiconductor layer adsorbed thereon was manufactured.
The manufactured sensor was set up in the QCM-D intermolecular interaction measuring apparatus, and a 0.2 mM ruthenium complex dye solution (N,N-dimethylformamide (DMF)/t-BuOH = 1/1) was flowed thereinto to make the dye adsorbed on the semiconductor layer to a predetermined value (200 $\mu g/cm^2$), and the time taken to obtain the predetermined value was measured. Further, the dye adsorption amount was calculated from a resonance frequency shift ($\Delta F$) of a quartz oscillator according to the following Sauerbrey equation.

$$\Delta F = -2 \times F_0^2 \times \Delta m / A (\mu \times P)^{1/2}$$

Here, $F_0$ represents the single frequency of the quartz oscillator, $\Delta m$ represents the mass change, A represents the piezoelectric active areas of the Au electrode (gold sensor), and $\mu$ and P represent the density and the rigidity, respectively, of the quartz.
For each of the ruthenium complex dyes with the respective structures, the adsorption rate was evaluated in accordance with the following evaluation standard, based on the time taken in a case where a ruthenium complex dye having a water content of less than 0.2% by mass was used. The results are shown in Table 2 below. If the results are in the ranges of A to D, the adsorption rate can be increased to a value higher than the standard.

- Evaluation Standard -

A: The time taken is less than 0.8 times the standard.
B: The time taken is 0.8 times or more and less than 0.9 times the standard.
C: The time taken is 0.9 times or more and less than 0.95 times the standard.
D: The time taken is 0.95 times or more and less than 1.00 time the standard.
E: The time taken is 1.00 times or more the standard.

[Test Example 2] Photoelectric Conversion Efficiency of Dye-Sensitized Solar Cell

Using the ruthenium complex dye having a specific water content, prepared in Preparation Examples, a dye-sensitized solar cell 20 (in a scale of 5 mm × 5 mm) shown in Fig. 2 was produced. A method for producing the same is as follows. For each dye-sensitized solar cell 20 thus produced, the photoelectric conversion performance was evaluated.

(Manufacture of Light-Receiving Electrode Precursor [A])

An electrically conductive support 41 was manufactured in which a fluorine-doped $SnO_2$ electrically-conductive film (transparent electrically-conductive film 43, film thickness; 500 nm) was formed on a glass substrate (substrate 44, thickness of 4 mm). Further, a titania paste "18NR-T" (manufactured by DyeSol) was screen-printed on the $SnO_2$ electrically-conductive film, followed by drying at 120°C. Then, the dried titania paste "18NR-T" was screen-printed again, followed by drying at 120°C for 1 hour. Thereafter, the dried titania paste was calcined at 500°C to form a semiconductor layer 45 (layer thickness; 10 μm). A titania paste "18NR-AO" (manufactured by DyeSol) was screen-printed on the semiconductor layer 45, followed by drying at 120°C for 1 hour. Then, the dried titania paste was calcined at 500°C to form a light-scattering layer 46 (layer thickness; 5 μm) on the semiconductor layer 45.
Thus, a photoconductor layer 42 (the area of the light-receiving surface; 5 mm × 5 mm, layer thickness; 15 μm, a ruthenium complex dye being not carried) was formed on the $SnO_2$ electrically-conductive film, thereby manufacturing a light-receiving electrode precursor [A] not carrying a ruthenium complex dye.

(Adsorption of Dye)

Next, each of the ruthenium complex dyes prepared in Preparation Examples in the following manner was carried onto the photoconductor layer 42 not carrying a ruthenium complex dye. First, the ruthenium complex dye was dissolved in a mixed solvent of t-butanol dehydrated with magnesium ethoxide and acetonitrile at 1:1 (volume ratio) such that the concentration of the ruthenium complex dye was $2 \times 10^{-4}$ mol/L. Further, 30 moles of deoxycholic acid as a co-adsorbent was added to one mole of the ruthenium complex dye, thereby preparing each of dye solutions. Next, the light-receiving electrode precursor [A] was immersed in each of the dye solutions at 25°C for 45 hours, pulled out, and then dried.

Thus, a light-receiving electrode 40 having the respective ruthenium complex dye carried on the light-receiving electrode precursor [A] was manufactured.

(Assembly of Dye-Sensitized Solar Cell)

Then, a platinum electrode (the thickness of a Pt thin film; 100 nm) having the same shape and size as those of the electrically conductive support 41 was manufactured as a counter electrode 48. Further, 0.1 M (mol/L) of iodine, 0.1 M of lithium iodide, 0.5 M of 4-t-butylpyridine, and 0.6 M of 1,2-dimethyl-3-propylimidazolium iodide were dissolved in acetonitrile to prepare a liquid electrolyte as an electrolytic solution. Further, a Spacer S "SURLYN" (trade name, manufactured by E. I. du Pont de Nemours and Company), which has a shape matching to the size of the photoconductor layer 42, was prepared.

Each of the light-receiving electrodes 40 manufactured as above and the counter electrode 48 were arranged to face each other through the Spacer S and thermally compressed, and then the liquid electrolyte was filled from the inlet for the electrolytic solution between the photoconductor layer 42 and the counter electrode 48, thereby forming a charge transfer layer 47. The outer periphery and the inlet for the electrolytic solution of thus manufactured cell were sealed and cured using RESIN XNR-5516 (manufactured by Nagase ChemteX Corporation), thereby producing dye-sensitized solar cells.

<Measurement of Photoelectric Conversion Efficiency (η/%)>

For the dye-sensitized solar cell, the photoelectric conversion efficiency (η/%) was measured by carrying out a cell characteristic test. The cell characteristic test was carried out through irradiation with artificial sunlight of 1,000 $W/m^2$ from a xenon lamp through an AM1.5 filter, using a solar simulator (WXS 85H, manufactured by WACOM ELECTRIC CO., LTD.). The current-voltage characteristics were measured using an I-V tester to determine a photoelectric conversion efficiency (η/%).

For the ruthenium complex dye with each of the structures, the photoelectric conversion efficiency was evaluated, based on the photoelectric conversion efficiency in a case where a ruthenium complex dye having a water content of less than 0.2% by mass was used. The results are shown in Table 2. If the results are in the ranges of A to D, the photoelectric conversion efficiency is superior to the standard, E indicates being equivalent to the standard, and F indicates being deteriorated.

- Evaluation Standard -

A: The photoelectric conversion efficiency is 1.20 times or more the standard.
B: The photoelectric conversion efficiency is less than 1.20 times and 1.10 times or more the standard.
C: The photoelectric conversion efficiency is less than 1.10 times and 1.05 times or more the standard.
D: The photoelectric conversion efficiency is less than 1.05 times and 1.01 times or more the standard.
E: The photoelectric conversion efficiency is less than 1.01 times and 0.99 times or more the standard.
F: The photoelectric conversion efficiency is less than 0.99 times the standard.

[Comparative Example]

A dye solution having a moisture amount equivalent to that of the solution at a time when a ruthenium complex dye having a water content less than one defined in the present invention was dissolved in a solvent including moisture, or a ruthenium complex dye having a water content within the range defined in the present invention was dissolved in a solvent not including moisture, was prepared, and using this dye solution, the tests on the adsorption rate and the photoelectric conversion efficiency were carried out. The details thereof will be described below.

<Adsorption Rate>

Water was added to DMF to prepare DMF having a water content of 1% by mass. By combining this solution, DMF, and t-butanol, a mixed solvent having a predetermined water content (DMF/t-BuOH = 1/1) was manufactured. The ruthenium complex dye used in Test No. 100 was dissolved in this solvent, the dye concentration was adjusted to 0.2 mM, and the moisture amount of the solution was adjusted to be the same as the moisture amount in the solution at a time when a ruthenium complex dye having a water content of 2.01% by mass was dissolved in a DMF/t-BuOH = 1/1 solvent using DMF having no moisture added thereto to a concentration of 0.2 mM, thereby preparing a dye solution. Using this dye solution, the adsorption rate was measured in the same manner as above (Test No. P-1). In the same manner, the adsorption rate was measured using the dye solution shown in Table 2 below (Test Nos. P-2 to P-4). The results are shown in Table 2 below.

<Conversion Efficiency>

Water was added to acetonitrile to prepare an acetonitrile having a water content of 0.1% by mass. By combining this solution, t-butanol, and acetonitrile, a water-containing mixed solvent with t-butanol:acetonitrile at 1:1 (volume ratio) having a predetermined water content was manufactured. The ruthenium complex dye used in Test No. 100 was dissolved in this solvent, the dye concentration was adjusted to $2 \times 10^{-4}$ mol/L, and the moisture amount of the solvent was adjusted to be the same as the moisture amount in the solution at a time when a ruthenium complex dye having a water content of 2.01% by mass was dissolved in a solvent with t-butanol and acetonitrile at 1:1 (volume ratio) using acetonitrile having no moisture added thereto to a concentration of $2 \times 10^{-4}$ mol/L, thereby preparing a dye solution. Using this dye solution, a dye-sensitized solar cell was produced, and the photoelectric conversion efficiency was measured in the same manner as above (Test No. P-1). In the same manner, the photoelectric conversion efficiency was measured using the dye-sensitized solar cell produced using the dye solution shown in Table 2 below (Test Nos. P-2 to P-4). The results are shown in Table 2 below.

Furthermore, evaluation of the adsorption rate and the photoelectric conversion efficiency in Test Nos. P-1 to P-4 was based on Test Nos. 100, 200, 300, and 400, respectively.

[Table 2]

| Test No. | Dye structure | Water content (% by mass) | Adsorption rate | Conversion efficiency | |
|---|---|---|---|---|---|
| 100 | Dye-1 | 0.11 | E (standard) | E (standard) | Comparative Example |
| 101 | Dye-1 | 0.27 | C | C | Present invention |
| 102 | Dye-1 | 0.41 | C | C | Present invention |
| 103 | Dye-1 | 0.52 | B | C | Present invention |
| 104 | Dye-1 | 0.90 | B | C | Present invention |
| 105 | Dye-1 | 1.07 | B | B | Present invention |
| 106 | Dye-1 | 1.47 | A | B | Present invention |
| 107 | Dye-1 | 1.58 | A | A | Present invention |
| 108 | Dye-1 | 2.01 | A | A | Present invention |
| 109 | Dye-1 | 2.43 | A | A | Present invention |
| 110 | Dye-1 | 2.59 | B | A | Present invention |
| 111 | Dye-1 | 2.92 | B | B | Present invention |
| 112 | Dye-1 | 3.07 | C | B | Present invention |
| 113 | Dye-1 | 3.39 | C | B | Present invention |
| 114 | Dye-1 | 3.57 | C | C | Present invention |
| 115 | Dye-1 | 3.98 | C | D | Present invention |
| 116 | Dye-1 | 4.22 | D | E | Comparative Example |

(continued)

| Test No. | Dye structure | Water content (% by mass) | Adsorption rate | Conversion efficiency | |
|---|---|---|---|---|---|
| 200 | Dye-2 | 0.09 | E (standard) | E (standard) | Comparative Example |
| 201 | Dye-2 | 0.32 | C | D | Present invention |
| 202 | Dye-2 | 0.98 | B | C | Present invention |
| 203 | Dye-2 | 1.49 | B | A | Present invention |
| 204 | Dye-2 | 2.20 | A | A | Present invention |
| 205 | Dye-2 | 2.52 | A | B | Present invention |
| 206 | Dye-2 | 3.03 | B | B | Present invention |
| 207 | Dye-2 | 3.49 | C | C | Present invention |
| 208 | Dye-2 | 3.83 | D | C | Present invention |
| 209 | Dye-2 | 4.04 | E | D | Comparative Example |
| 300 | Dye-3 | 0.15 | E (standard) | E (standard) | Comparative Example |
| 301 | Dye-3 | 0.99 | C | C | Present invention |
| 302 | Dye-3 | 1.05 | B | B | Present invention |
| 303 | Dye-3 | 1.46 | A | B | Present invention |
| 304 | Dye-3 | 1.52 | A | A | Present invention |
| 305 | Dye-3 | 2.20 | A | A | Present invention |
| 400 | Dye-4 | 0.18 | E (standard) | E (standard) | Comparative Example |
| 401 | Dye-4 | 2.48 | A | A | Present invention |
| 402 | Dye-4 | 2.53 | A | B | Present invention |
| 403 | Dye-4 | 2.99 | B | B | Present invention |
| 404 | Dye-4 | 3.05 | C | C | Present invention |
| 405 | Dye-4 | 3.71 | D | D | Present invention |
| P-1 | Dye-1 | 2.01 (equivalent) | E | F | Comparative Example |
| P-2 | Dye-2 | 2.20 (equivalent) | E | F | Comparative Example |
| P-3 | Dye-3 | 1.52 (equivalent) | E | F | Comparative Example |
| P-4 | Dye-4 | 2.48 (equivalent) | E | F | Comparative Example |

As shown in Table 2, even with the dye solution having the same water content as that of the ruthenium complex dye, in a case where a ruthenium complex dye having the water content defined in the present invention was not used, a result in which both of the adsorption rate and the photoelectric conversion efficiency were deteriorated was obtained (P-1 to P-4).

In contrast, it could be seen that in the ruthenium complex dye having the water content defined in the present invention, the adsorption rate onto the surface of semiconductor fine particles can be increased, and the photoelectric conversion efficiency can also be improved.

[Preparation Example 2] Preparation of Ruthenium Complex Dye

Dye-11 to Dye-19 having the following structures were prepared.

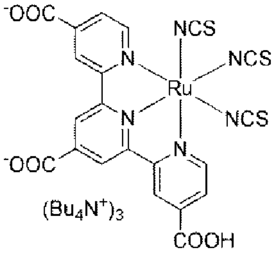

(Dye-11)

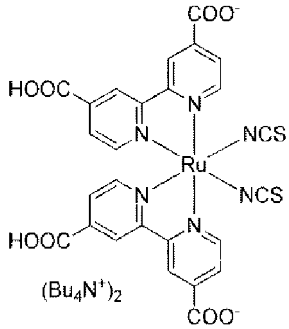

(Dye-12)

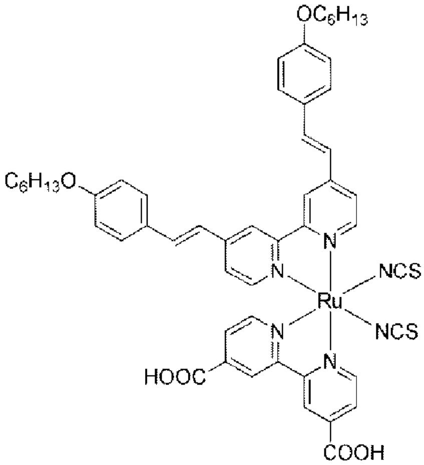

(Dye-13)

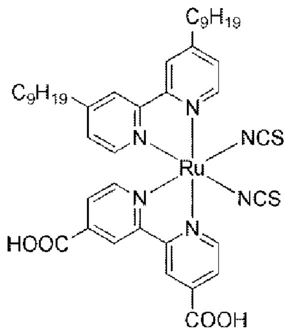

(Dye-14)

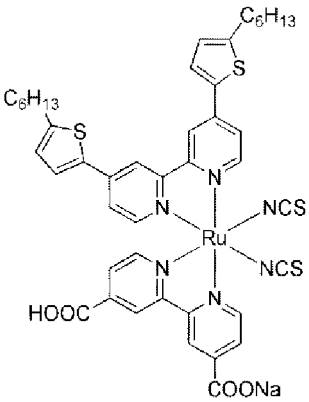

(Dye-15)

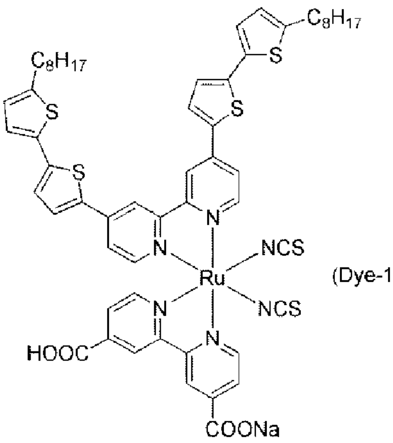

(Dye-16)

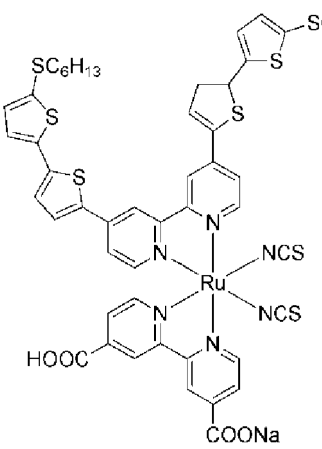

(Dye-17)

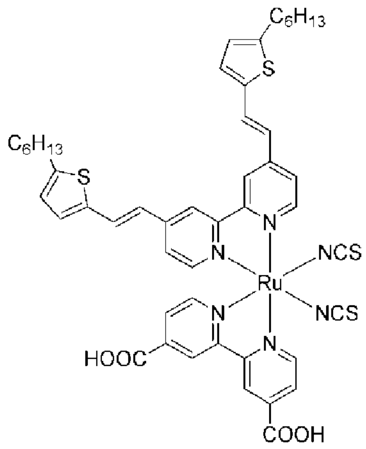

(Dye-18)

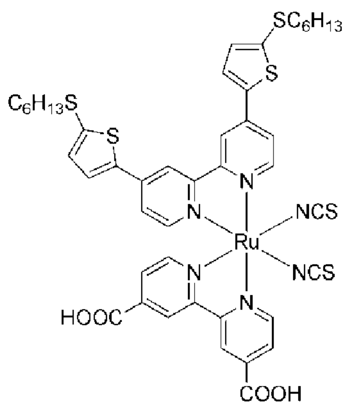

(Dye-19)

Dye-11 is Complex 4 described in Journal of the American Chemical Society, 2001, Vol. 123, pp. 1613 to 1624, which is a compound called Black Dye or N749.

Dye-11 was synthesized completely in the same manner as the method described in JP2013-133294A. In this publication, there is no description on the drying time, but drying was carried out in the same manner as for Dye-1, and continued until a decrease in weight could not be observed even when the drying conditions were kept for 5 hours. The water content was measured in the same manner as above, and as a result, the water content of Dye-11 after the drying was 0.11% by mass. By changing the drying temperature and the time, Dye-11's having different water contents shown in the following table were prepared.

Dye-12 is 4 described in Inorganic Chemistry, 1999, Vol. 38, pp. 6298 to 6305, which is a compound called N719.

Dye-12 was synthesized completely in the same manner as the method described in Inorganic Chemistry, 1999, Vol. 38, pp. 6298 to 6305. In this document, there is no description on the drying time, but drying was carried out in the same manner as for Dye-1, and continued until a decrease in weight could not be observed even when the drying conditions were kept for 5 hours. The water content was measured in the same manner as above, and as a result, the water content of Dye-12 after the drying was 0.18% by mass. By changing the drying temperature and the time, Dye-12's having different water contents shown in the following table were prepared.

Dye-13 is K-19 described in JP2008-507570A.

Dye-13 was synthesized completely in the same manner as the method described in JP2008-507570A. In this publication, there is no description on the drying time, but drying was carried out in the same manner as for Dye-1, and continued until a decrease in weight could not be observed even when the drying conditions were kept for 5 hours. The water content was measured in the same manner as above, and as a result, the water content of Dye-13 after the drying was 0.12% by mass. By changing the drying temperature and the time, Dye-13's having different water contents shown in the following table were prepared.

Dye-14 is 2 described in Inorganic Chemistry, 2004, Vol. 43, pp. 4216 to 4226, which is a compound called Z907.

Dye-14 was synthesized completely in the same manner as the method described in Inorganic Chemistry, 2004, Vol. 43, pp. 4216 to 4226. In this document, there is no description on the drying time, but drying was carried out in the same manner as for Dye-1, and continued until a decrease in weight could not be observed even when the drying conditions were kept for 5 hours. The water content was measured in the same manner as above, and as a result, the water content of Dye-14 after the drying was 0.08% by mass. By changing the drying temperature and the time, Dye-14's having different water contents shown in the following table were prepared.

Dye-15 is C101 described in Journal of the American Chemical Society, 2008, Vol. 130, pp. 10720 to 10728.

Dye-15 was synthesized completely in the same manner as the method described in Journal of the American Chemical Society, 2008, Vol. 130, pp. 10720 to 10728. In this document, there is no description on the drying time, but drying was carried out in the same manner as for Dye-1, and continued until a decrease in weight could not be observed even when the drying conditions were kept for 5 hours. The water content was measured in the same manner as above, and as a result, the water content of Dye-15 after the drying was 0.10% by mass. By changing the residual amount and the water content of the solvent in the final step, the drying temperature, and the time, Dye-15's having different water contents shown in the following table were prepared.

Dye-16 is CYC-B1 described in JP2007-302879A.

Dye-16 was synthesized completely in the same manner as the method described in JP2007-302879A. In this publication, there is no description on the drying time, but drying was carried out in the same manner as for Dye-1, and continued until a decrease in weight could not be observed even when the drying conditions were kept for 5 hours. The water content was measured in the same manner as above, and as a result, the water content of Dye-16 after the drying was 0.07% by mass. By changing the residual amount and the water content of the solvent in the final step, the drying temperature, and the time, Dye-16's having different water contents shown in the following table were prepared.

Dye-17 is CYC-B11 described in ACS nano, 2009, Vol. 3, pp. 3103 to 3109.

Dye-17 was synthesized completely in the same manner as the method described in ACS nano, 2009, Vol. 3, pp. 3103 to 3109. In this publication, there is no description on the drying time, but drying was carried out in the same manner as for Dye-1, and continued until a decrease in weight could not be observed even when the drying conditions were kept for 5 hours. The water content was measured in the same manner as above, and as a result, the water content of Dye-17 after the drying was 0.07% by mass. By changing the residual amount and the water content of the solvent in the final step, the drying temperature, and the time, Dye-17's having different water contents shown in the following table were prepared.

Dye-18 is J2 described in WO2007/091525A.

Dye-18 was synthesized completely in the same manner as the method described in WO2007/091525A. In this publication, there is no description on the drying time, but drying was carried out in the same manner as for Dye-1, and continued until a decrease in weight could not be observed even when the drying conditions were kept for 5 hours. The water content was measured in the same manner as above, and as a result, the water content of Dye-18 after the drying was 0.05% by mass. By changing the residual amount and the water content of the solvent in the final step, the drying temperature, and time, Dye-18's having different water contents shown in the following table were prepared.

Dye-19 is C106 described in Journal of the Physical Chemistry C, 2009, Vol. 113, pp. 6290 to 6297.

Dye-19 was synthesized completely in the same manner as the method described in Journal of the Physical Chemistry C, 2009, Vol. 113, pp. 6290 to 6297. In this publication, there is no description on the drying time, but drying was carried out in the same manner as for Dye-1, and continued until a decrease in weight could not be observed even when the drying conditions were kept for 5 hours. The water content was measured in the same manner as above, and as a result, the water content of Dye-19 after the drying was 0.06% by mass. By changing the water content of the solvent in the final step, the drying temperature, and time, Dye-19's having different water contents shown in the following table were prepared.

Using the ruthenium complex dye obtained in Preparation Example 2, the adsorption rate was measured in the same manner as in Test Example 1 and the dye-sensitized solar cell was produced in the same manner as in Test Example 2, and the photoelectric conversion efficiency thereof was measured. The results are shown in the following table.

[Table 3]

| Test No. | Dye structure | Water content (% by mass) | Adsorption rate | Conversion efficiency | |
|---|---|---|---|---|---|
| 1100 | Dye-11 | 0.11 | E (standard) | E (standard) | Comparative Example |
| 1101 | Dye-11 | 1.53 | C | D | Reference Example |
| 1102 | Dve-11 | 2.57 | D | D | Reference Example |
| 1103 | Dye-11 | 5.01 | E | F | Comparative Example |

(continued)

| Test No. | Dye structure | Water content (% by mass) | Adsorption rate | Conversion efficiency | |
|---|---|---|---|---|---|
| 1200 | Dye-12 | 0.18 | E (standard) | E (standard) | Comparative Example |
| 1201 | Dye-12 | 2.33 | c | C | Reference Example |
| 1202 | Dye-12 | 3.14 | D | D | Reference Example |
| 1203 | Dye-12 | 4.22 | E | E | Comparative Example |
| 1300 | Dye-13 | 0.12 | E (standard) | E (standard) | Comparative Example |
| 1301 | Dye-13 | 1.88 | B | B | Reference Example |
| 1302 | Dye-13 | 2.55 | C | C | Reference Example |
| 1303 | Dye-13 | 3.93 | c | D | Reference Example |
| 1400 | Dye-14 | 0.08 | E (standard) | E (standard) | Comparative Example |
| 1401 | Dye-14 | 0.98 | C | C | Reference Example |
| 1402 | Dye-14 | 2.00 | C | B | Reference Example |
| 1403 | Dye-14 | 3.38 | D | C | Reference Example |
| 1500 | Dye-15 | 0.10 | E (standard) | E (standard) | Comparative Example |
| 1501 | Dye-15 | 1.78 | C | B | Reference Example |
| 1502 | Dye-15 | 2.69 | D | B | Reference Example |
| 1503 | Dye-15 | 3.61 | D | C | Reference Example |
| 1600 | Dye-16 | 0.07 | E (standard) | E (standard) | Comparative Example |
| 1601 | Dye-16 | 0.23 | D | C | Reference Example |
| 1602 | Dye-16 | 2.44 | C | B | Reference Example |
| 1603 | Dye-16 | 3.29 | D | B | Reference Example |
| 1700 | Dye-17 | 0.07 | E (standard) | E (standard) | Comparative Example |
| 1701 | De-17 | 0.96 | C | C | Reference Example |

(continued)

| Test No. | Dye structure | Water content (% by mass) | Adsorption rate | Conversion efficiency | |
|---|---|---|---|---|---|
| 1702 | Dye-17 | 1.44 | B | C | Reference Example |
| 1703 | Dye-I7 | 2.36 | B | B | Reference Example |
| 1800 | Dve-18 | 0.05 | E (standard) | E (standard) | Comparative Example |
| 1801 | Dye-18 | 1.75 | B | B | Reference Example |
| 1802 | Dye-18 | 2.88 | C | B | Reference Example |
| 1803 | Dye-18 | 3.76 | D | C | Reference Example |
| 1900 | Dye-19 | 0.06 | E (standard) | E (standard) | Comparative Example |
| 1901 | Dye-19 | 2.38 | B | B | Reference Example |
| 1902 | Dye-19 | 3.01 | C | C | Reference Example |
| 1903 | Dye-19 | 3.83 | D | D | Reference Example |

As shown in Table 3, it could be seen that the ruthenium complex dye having the water content defined in the present invention can increase the adsorption rate onto the surface of semiconductor fine particles and also improve photoelectric conversion efficiency.

[Preparation Example 3] Preparation of Ruthenium Complex Dye

Dye-20 to Dye-32 having the following structures were prepared.

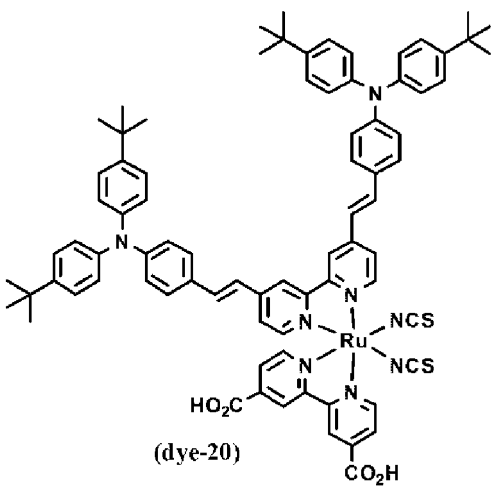
(dye-20)

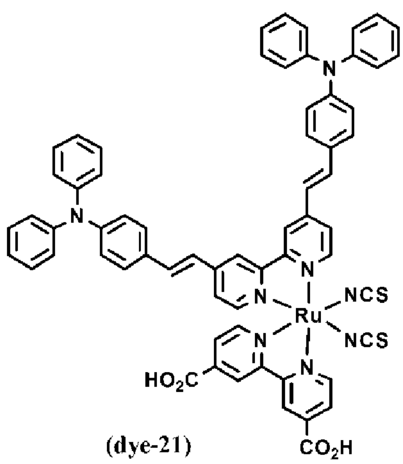
(dye-21)

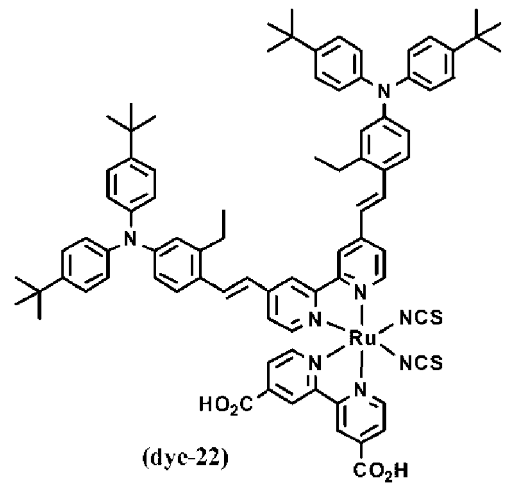

(dye-22)

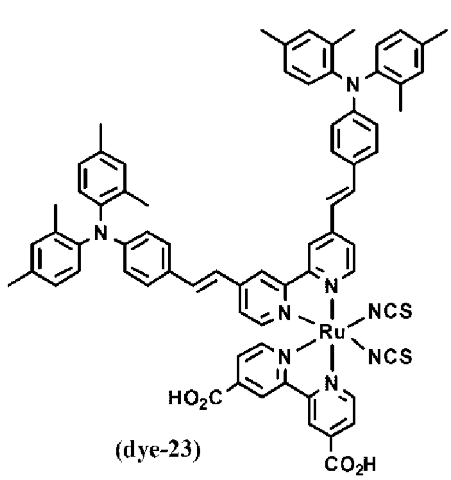

(dye-23)

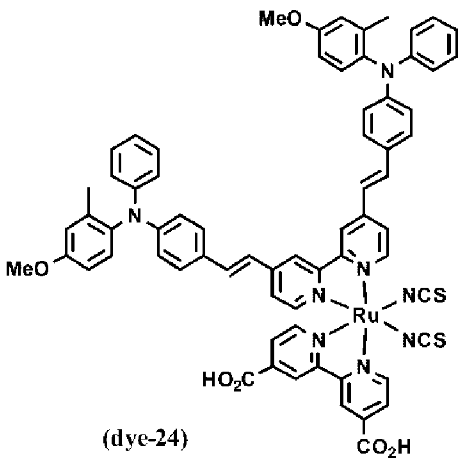

(dye-24)

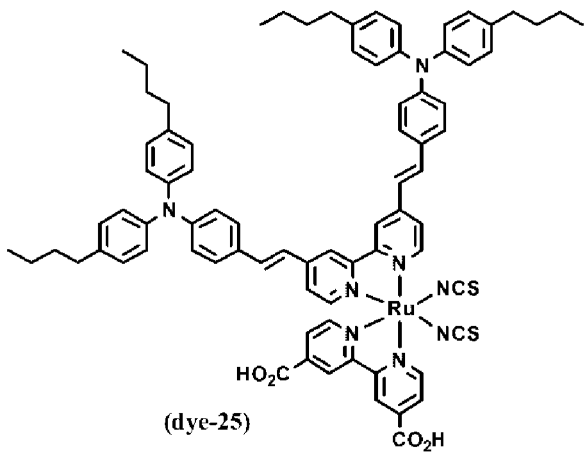

(dye-25)

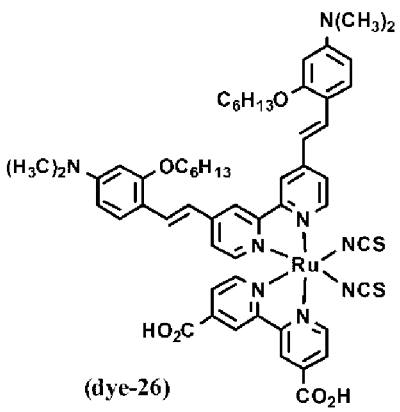

(dye-26)

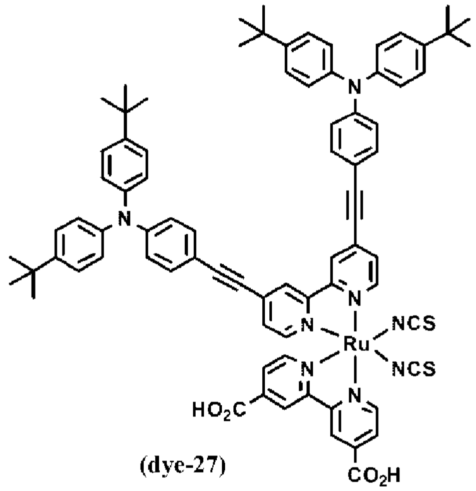

(dye-27)

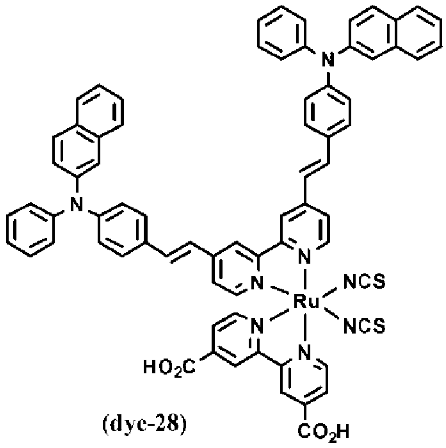

(dye-28)

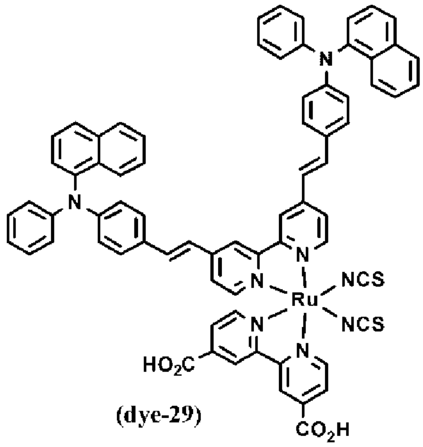

(dye-29)

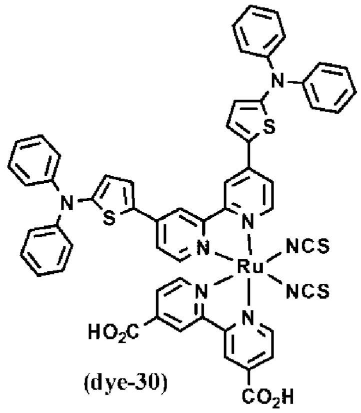

(dye-30)

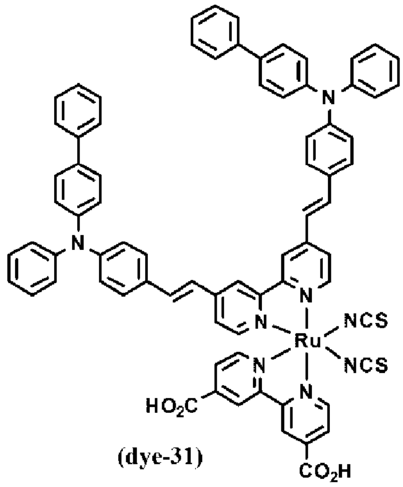

(dye-31)

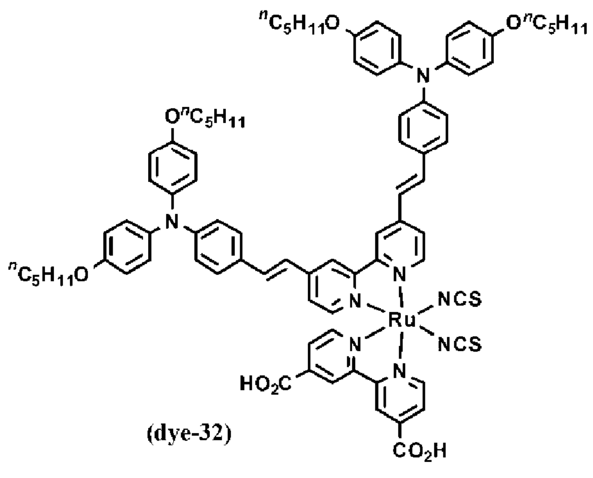

(dye-32)

Dye-20 is D-1-14a described in WO2013/047384A. It was synthesized in the same manner as the method described in the same publication. In this publication, there is no description on the drying time, but drying was carried out in the same manner as for Dye-1, and continued until a decrease in weight could not be observed even when the drying conditions were kept for 5 hours. The water content was measured in the same manner as above, and as a result, the water content of Dye-20 after the drying was 0.11% by mass. By changing the water content of the solvent in the final step, the drying temperature, and time, Dye-20's having different water contents shown in the following table were prepared.

For Dye-21 to Dye-32, in the same manner as for Dye-20, ruthenium complex dyes having the water contents shown in Table 4 were prepared.

The adsorption rate was measured in the same manner as in Test Example 3, using the ruthenium complex dye obtained in Preparation Example 3, and a dye-sensitized solar cell was produced in the same manner as in Test Example 2 and the photoelectric conversion efficiency thereof was measured. The results are shown in Table 4.

[Test Example 3] Adsorption Rate

In the same manner as in Test Example 2, each of dye solutions including the ruthenium complex dyes obtained above was prepared.

The light-receiving electrode precursor [A] (light-receiving surface of 0.25 $cm^2$) manufactured in Test Example 2 was immersed in each of the dye solutions in a dark room at a temperature of 25°C for 1 hour, pulled up, and then dried. Thus, a light-receiving electrode 40 having the ruthenium complex dye carried on the light-receiving electrode precursor [A] was manufactured.

The obtained light-receiving electrode 40 was immersed in 3 ml of a 10% tetrabutylammonium hydroxide (TBAOH) methanol solution at room temperature for 15 hours to detach the dye. The amount of the dye in the solution thus obtained was measured by high performance liquid chromatography (HPLC) to quantitatively determine the adsorption amount of each dye.

For each of the ruthenium complex dyes with the respective structures, the adsorption amount was evaluated in accordance with the following evaluation standard, based on the adsorption amount in a case where a ruthenium complex dye having a water content of less than 0.2% by mass was used. The results are shown in Table 4. If the results are in the ranges of A to D, the adsorption amount with a certain period of time is high, and thus, the adsorption rate can be increased to a value higher than the standard.

- Evaluation Standard -

A: The adsorption amount is 1.20 times or more the standard.
B: The adsorption amount is 1.15 times or more and less than 1.20 times the standard.
C: The adsorption amount is 1.10 times or more and less than 1.15 times the standard.
D: The adsorption amount is 1.05 times or more and less than 1.10 times the standard.
E: The adsorption amount is less than 1.05 times the standard.

[Table 4]

| Test No. | Dye structure | Water content (% by mass) | Adsorption rate | Conversion efficiency | |
|---|---|---|---|---|---|
| 2000 | Dye-20 | 0.11 | E (standard) | E (standard) | Comparative Example |
| 2001 | Dye-20 | 0.25 | c | D | Example |
| 2002 | Dye-20 | 0.78 | B | c | Example |
| 2003 | Dye-20 | 1.21 | A | B | Example |
| 2004 | Dye-20 | 2.31 | A | A | Example |
| 2005 | Dye-20 | 2.84 | A | B | Example |
| 2006 | Dye-20 | 3.25 | B | c | Example |
| 2007 | Dye-20 | 3.81 | c | D | Example |
| 2008 | Dye-20 | 4.26 | E | E | Comparative Example |
| 2100 | Dye-21 | 0.16 | E (standard) | E (standard) | Comparative Example |
| 2101 | Dye-21 | 1.72 | A | A | Example |
| 2102 | Dye-21 | 2.81 | A | B | Example |

(continued)

| Test No. | Dye structure | Water content (% by mass) | Adsorption rate | Conversion efficiency | |
|---|---|---|---|---|---|
| 2103 | Dye-21 | 3.12 | B | c | Example |
| 2200 | Dye-22 | 0.15 | E (standard) | E (standard) | Comparative Example |
| 2201 | Dye-22 | 1.70 | A | A | Example |
| 2202 | Dye-22 | 2.94 | B | B | Example |
| 2203 | Dye-22 | 3.11 | C | C | Example |
| 2300 | Dye-23 | 0.17 | E (standard) | E (standard) | Comparative Example |
| 2301 | Dye-23 | 1.66 | A | A | Example |
| 2302 | Dye-23 | 2.78 | A | B | Example |
| 2303 | Dye-23 | 3.43 | B | c | Example |
| 2400 | Dye-24 | 0.13 | E (standard) | E (standard) | Comparative Example |
| 2401 | Dye-24 | 2.35 | A | A | Example |
| 2402 | Dye-24 | 2.78 | B | B | Example |
| 2403 | Dye-24 | 3.42 | B | C | Example |
| 2500 | Dye-25 | 0.12 | E (standard) | E (standard) | Comparative Example |
| 2501 | Dye-25 | 1.52 | A | A | Example |
| 2502 | Dye-25 | 2.59 | B | A | Example |
| 2503 | Dye-25 | 3.31 | B | c | Example |
| 2600 | Dye-26 | 0.16 | E (standard) | E (standard) | Comparative Example |
| 2601 | Dye-26 | 1.55 | A | A | Example |
| 2602 | Dye-26 | 2.84 | A | B | Example |
| 2603 | Dye-26 | 3.08 | B | c | Example |
| 2700 | Dye-27 | 0.09 | E (standard) | E (standard) | Comparative Example |
| 2701 | Dye-27 | 1.52 | A | A | Example |
| 2702 | Dye-27 | 2.91 | A | A | Example |
| 2703 | Dye-27 | 3.38 | B | c | Example |
| 2800 | Dye-28 | 0.16 | E (standard) | E (standard) | Comparative Example |
| 2801 | Dye-28 | 1.74 | A | A | Example |
| 2802 | Dye-28 | 2.88 | B | B | Example |
| 2803 | Dye-28 | 3.36 | B | c | Example |
| 2900 | Dye-29 | 0.12 | E (standard) | E (standard) | Comparative Example |
| 2901 | Dye-29 | 1.56 | A | A | Example |

(continued)

| Test No. | Dye structure | Water content (% by mass) | Adsorption rate | Conversion efficiency | |
|---|---|---|---|---|---|
| 2902 | Dye-29 | 2.85 | B | A | Example |
| 2903 | Dye-29 | 3.16 | B | c | Example |
| 3000 | Dye-30 | 0.16 | E (standard) | E (standard) | Comparative Example |
| 3001 | Dye-30 | 1.54 | B | B | Reference Example |
| 3002 | Dye-30 | 2.61 | B | c | Reference Example |
| 3003 | Dye-30 | 3.92 | D | c | Reference Example |
| 3100 | Dye-31 | 0,11 | E (standard) | E (standard) | Comparative Example |
| 3101 | Dye-31 | 1.55 | A | A | Example |
| 3102 | Dve-31 | 2.83 | B | A | Example |
| 3103 | Dye-31 | 3.19 | B | c | Example |
| 3200 | Dye-32 | 0.11 | E (standard) | E (standard) | Comparative Example |
| 3201 | Dye-32 | 1.59 | A | A | Example |
| 3202 | Dye-32 | 2.82 | B | A | Example |
| 3203 | Dye-32 | 3.11 | B | C | Example |

As shown in Table 4, it could be seen that the ruthenium complex dye having the water content defined in the present invention can increase the adsorption rate onto the surface of semiconductor fine particles and also improve photoelectric conversion efficiency.

Although the present invention has been described with reference to embodiments and drawings, it is not intended that the present invention is not limited by any of the details of the description unless otherwise specified, but should rather be construed broadly within the scope of the present invention as set out in the accompanying claims.

The present application claims the priority based on JP2015-054036 filed on March 17, 2015 and JP2015-118147 filed on June 11, 2015.

Explanation of References

1, 41: Electrically conductive support
2, 42: Photoconductor layer
21: Dye
22: Semiconductor fine particles
3, 47: Charge transfer layer
4, 48: Counter electrode
5, 40: Light-receiving electrode
6: External circuit
10: Photoelectric conversion element
100: System in which photoelectric conversion element is applied to cell uses
M: Operating means (for example, electric motor)
20: Dye-sensitized solar cell
43: Transparent electrically-conductive film

44: Substrate
45: Semiconductor layer
46: Light-scattering layer
S: Spacer

## Claims

1. A ruthenium complex dye having a water content of 0.2% to 4.0% by mass,

wherein the ruthenium complex dye is represented by Formula (1),

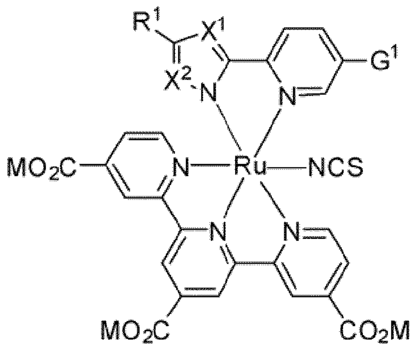

Formula (1)

in Formula (1), M represents a hydrogen ion or a cation; $X^1$ represents a nitrogen atom or $CR^2$, in a case where $X^1$ is a nitrogen atom, $X^2$ represents a nitrogen atom, and in a case where $X^1$ is $CR^2$, $X^2$ represents nitrogen atom or $CR^3$; $R^1$ to $R^3$ each represent a hydrogen atom, an alkyl group, a heteroaryl group, an aryl group, or a halogen atom; and $G^1$ represents an alkenyl group or a group having a structure represented by Formula (G1),

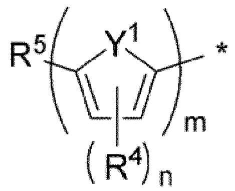

Formula (G1)

in Formula (G1), $R^4$ represents an alkyl group, an alkynyl group, an alkenyl group, an alkoxy group, an alkylthio group, an amino group, a heteroaryl group, or an aryl group; $R^5$ represents a hydrogen atom, an alkyl group, an alkynyl group, an alkenyl group, an alkoxy group, an alkylthio group, an amino group, a heteroaryl group, or an aryl group; m represents an integer of 1 to 3; n represents an integer of 0 to 2; $Y^1$ represents an oxygen atom, a sulfur atom, $NR^f$, a Se atom, $CR^f_2$, or $SiR^f_2$; $R^f$ represents a hydrogen atom or an alkyl group; and * represents a bonding moiety to the pyridine ring in Formula (1).

2. The ruthenium complex dye according to claim 1, wherein $X^1$ is CH and $X^2$ is a nitrogen atom.

3. The ruthenium complex dye according to claim 1 or 2, wherein $Y^1$ is a sulfur atom.

4. The ruthenium complex dye according to any one of claims 1 to 3, wherein n is 0.

5. The ruthenium complex dye according to any one of claims 1 to 4, wherein $R^1$ is an alkyl group.

6. The ruthenium complex dye according to any one of claims 1 to 5,

wherein $R^5$ is an alkyl group, an alkynyl group, an alkenyl group, an alkoxy group, or an alkylthio group.

**7.** A ruthenium complex dye having a water content of 0.2% to 4.0% by mass,

wherein the ruthenium complex dye is represented by Formula (2),

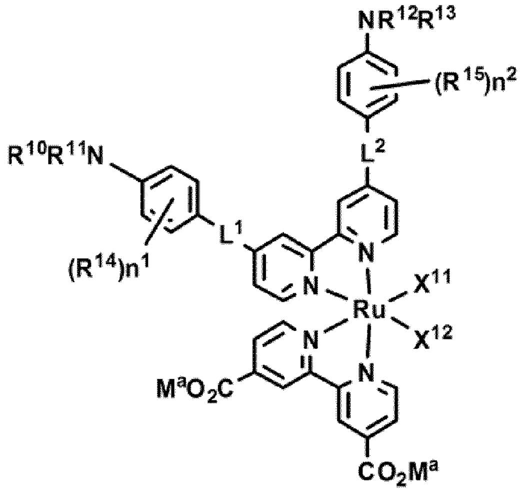

Formula (2)

in Formula (2), $R^{10}$ to $R^{13}$ each represent an alkyl group, an aryl group, or a heteroaryl group or $R^{10}$ and $R^{11}$, and $R^{12}$ and $R^{13}$, may be bonded to each other to form a nitrogen-containing ring; $R^{14}$ and $R^{15}$ each represent an alkyl group, an alkoxy group, an amino group, or a halogen atom; $n^1$ and $n^2$ each independently represent an integer of 0 to 4; $L^t$ and $L^2$ each represent a single bond or a divalent linking group formed of a conjugated chain; $X^{11}$ and $X^{12}$ each represent a thiocyanato group, an isothiocyanato group, a cyano group, an isonitrile group, or a halogen atom; and $M^a$ represents a hydrogen ion or a cation.

**8.** The ruthenium complex dye according to claim 7, wherein $L^1$ and $L^2$ are each an ethenylene group or an ethynylene group.

**9.** The ruthenium complex dye according to any one of claims 1 to 8, wherein the water content is 0.5% to 3.5% by mass.

**10.** The ruthenium complex dye according to claim 9, wherein the water content is 1.0% to 3.0% by mass.

**11.** The ruthenium complex dye according to claim 10, wherein the water content is 1.5% to 2.5% by mass.

**12.** The ruthenium complex dye according to any one of claims 1 to 11, used as a sensitizing dye of a dye-sensitized solar cell.

**13.** A dye solution comprising the ruthenium complex dye according to any one of claims 1 to 12.

**14.** A photoelectric conversion element comprising:

an electrically conductive support;
a photoconductor layer including an electrolyte;
a charge transfer layer including an electrolyte; and
a counter electrode,
wherein the photoconductor layer has semiconductor fine particles having the ruthenium complex dye according to any one of claims 1 to 11 carried thereon.

**15.** A dye-sensitized solar cell comprising the photoelectric conversion element according to claim 14.

## Patentansprüche

1. Rutheniumkomplexfarbstoff mit einem Wassergehalt von 0,2 Masse-% bis 4,0 Masse-%, wobei der Rutheniumkomplexfarbstoff durch Formel (1) dargestellt ist,

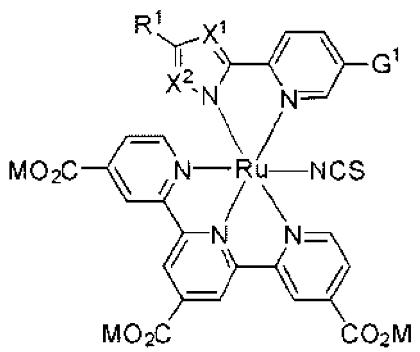

Formula (1)

in Formel (1) M ein Wasserstoffion oder ein Kation darstellt; $X^1$ ein Stickstoffatom oder $CR^2$ darstellt, in einem Fall, in dem $X^1$ ein Stickstoffatom ist, $X^2$ ein Stickstoffatom darstellt, und in einem Fall, in dem $X^1$ $CR^2$ ist, $X^2$ ein Stickstoffatom oder $CR^3$ darstellt; $R^1$ bis $R^3$ jeweils ein Wasserstoffatom, eine Alkylgruppe, eine Heteroarylgruppe, eine Arylgruppe oder ein Halogenatom darstellen und $G^1$ eine Alkenylgruppe oder eine Gruppe mit einer durch Formel (G1) dargestellten Struktur darstellt,

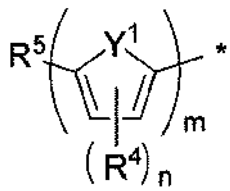

Formula (G1)

in Formel (G1) $R^4$ eine Alkylgruppe, eine Alkinylgruppe, eine Alkenylgruppe, eine Alkoxygruppe, eine Alkylthiogruppe, eine Aminogruppe, eine Heteroarylgruppe oder eine Arylgruppe darstellt; $R^5$ ein Wasserstoffatom, eine Alkylgruppe, eine Alkinylgruppe, eine Alkenylgruppe, eine Alkoxygruppe, eine Alkylthiogruppe, eine Aminogruppe, eine Heteroarylgruppe oder eine Arylgruppe darstellt; m eine ganze Zahl von 1 bis 3 darstellt; n eine ganze Zahl von 0 bis 2 darstellt; $Y^1$ ein Sauerstoffatom, ein Schwefelatom, $NR^f$, ein Se-Atom, $CR^f_2$ oder $SiR^f_2$ darstellt; $R^f$ ein Wasserstoffatom oder eine Alkylgruppe darstellt und * einen bindenden Rest zum Pyridinring in Formel (1) darstellt.

2. Rutheniumkomplexfarbstoff nach Anspruch 1, wobei $X^1$ CH ist und $X^2$ ein Stickstoffatom ist.

3. Rutheniumkomplexfarbstoff nach Anspruch 1 oder 2, wobei $Y^1$ ein Schwefelatom ist.

4. Rutheniumkomplexfarbstoff nach einem der Ansprüche 1 bis 3, wobei n 0 ist.

5. Rutheniumkomplexfarbstoff nach einem der Ansprüche 1 bis 4, wobei $R^1$ eine Alkylgruppe ist.

6. Rutheniumkomplexfarbstoff nach einem der Ansprüche 1 bis 5, wobei $R^5$ eine Alkylgruppe, eine Alkinylgruppe, eine Alkenylgruppe, eine Alkoxygruppe oder eine Alkylthiogruppe ist.

7. Rutheniumkomplexfarbstoff mit einem Wassergehalt von 0,2 Masse-% bis 4,0 Masse-%,

wobei der Rutheniumkomplexfarbstoff durch Formel (2) dargestellt ist,

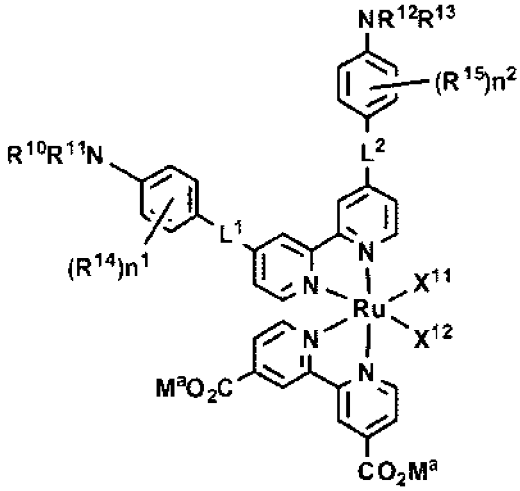

Formula (2)

in Formel (2) $R^{10}$ bis $R^{13}$ jeweils eine Alkylgruppe, eine Arylgruppe oder eine Heteroarylgruppe darstellen oder $R^{10}$ und $R^{11}$ sowie $R^{12}$ und $R^{13}$ miteinander verbunden sein können, wodurch ein stickstoffhaltiger Ring gebildet wird; $R^{14}$ und $R^{15}$ jeweils eine Alkylgruppe, eine Alkoxygruppe, eine Aminogruppe oder ein Halogenatom darstellen; $n^1$ und $n^2$ jeweils unabhängig eine ganze Zahl von 0 bis 4 darstellen; $L^1$ und $L^2$ jeweils eine Einfachbindung oder eine zweiwertige verbindende Gruppe darstellen, die aus einer konjugierten Kette gebildet ist; $X^{11}$ und $X^{12}$ jeweils eine Thiocyanatogruppe, eine Isothiocyanatogruppe, eine Cyanogruppe, eine Isonitrilgruppe oder ein Halogenatom darstellen und $M^a$ ein Wasserstoffion oder ein Kation darstellt.

**8.** Rutheniumkomplexfarbstoff nach Anspruch 7,
wobei $L^1$ und $L^2$ jeweils eine Ethenylengruppe oder eine Ethinylengruppe sind.

**9.** Rutheniumkomplexfarbstoff nach einem der Ansprüche 1 bis 8,
wobei der Wassergehalt 0,5 Masse-% bis 3,5 Masse-% beträgt.

**10.** Rutheniumkomplexfarbstoff nach Anspruch 9,
wobei der Wassergehalt 1,0 Masse-% bis 3,0 Masse-% beträgt.

**11.** Rutheniumkomplexfarbstoff nach Anspruch 10,
wobei der Wassergehalt 1,5 Masse-% bis 2,5 Masse-% beträgt.

**12.** Rutheniumkomplexfarbstoff nach einem der Ansprüche 1 bis 11, der als Sensibilisierungsfarbstoff einer farbstoffsensibilisierten Solarzelle verwendet wird.

**13.** Farbstofflösung, die den Rutheniumkomplexfarbstoff nach einem der Ansprüche 1 bis 12 umfasst.

**14.** Element zur fotoelektrischen Umwandlung, das Folgendes umfasst:

einen elektrisch leitfähigen Träger;
eine Fotoleiterschicht, die einen Elektrolyten einschließt;
eine Ladungsübertragungsschicht, die einen Elektrolyten einschließt; und
eine Gegenelektrode,
wobei die Fotoleiterschicht feine Halbleiterpartikel aufweist, auf die der Rutheniumkomplexfarbstoff nach einem der Ansprüche 1 bis 11 aufgetragen ist.

**15.** Farbstoffsensibilisierte Solarzelle, die das Element zur fotoelektrischen Umwandlung nach Anspruch 14 umfasst.

## Revendications

**1.** Colorant complexe de ruthénium ayant une teneur en eau de 0,2 % à 4,0 % en masse,
dans lequel le colorant complexe de ruthénium est représenté par la Formule (1),

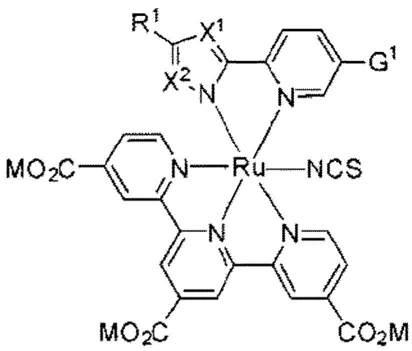

Formule(1)

dans la Formule (1), M représente un ion ou un cation hydrogène ; $X^1$ représente un atome d'azote ou $CR^2$, dans un cas où $X^1$ est un atome d'azote, $X^2$ représente un atome d'azote, et dans un cas où $X^1$ est $CR^2$, $X^2$ représente un atome d'azote ou $CR^3$ ; $R^1$ à $R^3$ représentent chacun un atome d'hydrogène, un groupe alkyle, un groupe hétéroaryle, un groupe aryle, ou un atome d'halogène ; et $G^1$ représente un groupe alcényle ou un groupe ayant une structure représentée par la Formule (G1),

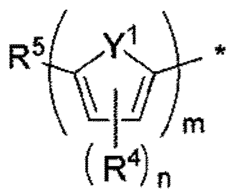

Formule(G1)

dans la Formule (G1), $R^4$ représente un groupe alkyle, un groupe alcynyle, un groupe alcényle, un groupe alcoxy, un groupe alkylthio, un groupe amino, un groupe hétéroaryle, ou un groupe aryle ; $R^5$ représente un atome d'hydrogène, un groupe alkyle, un groupe alcynyle, un groupe alcényle, un groupe alcoxy, un groupe alkylthio, un groupe amino, un groupe hétéroaryle, ou un groupe aryle ; m représente un entier de 1 à 3 ; n représente un entier de 0 à 2 ; $Y^1$ représente un atome d'oxygène, un atome de soufre, $NR^f$, un atome de Se, $CR^f_2$, ou $SiR^f_2$ ; $R^f$ représente un atome d'hydrogène ou un groupe alkyle ; et * représente une fraction de liaison au cycle pyridine dans la Formule (1).

2. Colorant complexe de ruthénium selon la revendication 1, dans lequel $X^1$est CH et $X^2$ est un atome d'azote.

3. Colorant complexe de ruthénium selon la revendication 1 ou 2, dans lequel $Y^1$ est un atome de soufre.

4. Colorant complexe de ruthénium selon l'une quelconque des revendications 1 à 3, dans lequel n est 0.

5. Colorant complexe de ruthénium selon l'une quelconque des revendications 1 à 4, dans lequel $R^1$ est un groupe alkyle.

6. Colorant complexe de ruthénium selon l'une quelconque des revendications 1 à 5, dans lequel $R^5$ est un groupe alkyle, un groupe alcynyle, un groupe alcényle, un groupe alcoxy, ou un groupe alkylthio.

7. Colorant complexe de ruthénium ayant une teneur en eau de 0,2 % à 4,0 % en masse,

dans lequel le colorant complexe de ruthénium est représenté par la Formule (2),

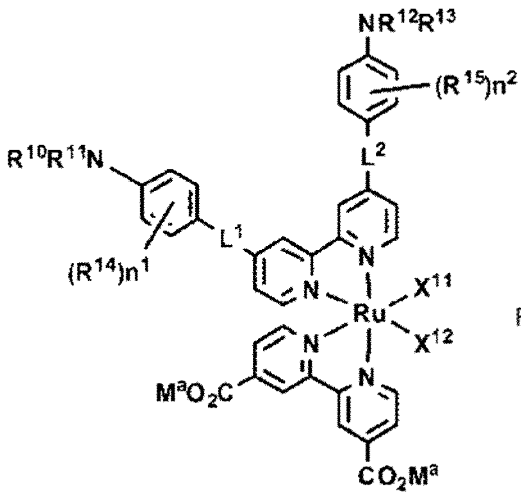

Formule (2)

dans la Formule (2), $R^{10}$ à $R^{13}$ représentent chacun un groupe alkyle, un groupe aryle, un groupe hétéroaryle ou $R^{10}$ et $R^{11}$, et $R^{12}$ et $R^{13}$, peuvent être liés l'un à l'autre pour former un cycle contenant de l'azote ; $R^{14}$ et $R^{15}$ représentent chacun un groupe alkyle, un groupe alcoxy, un groupe amino, ou un atome d'halogène ; $n^1$ et $n^2$ représentent chacun indépendamment un entier de 0 à 4 ; $L^1$ et $L^2$ représentent chacun une liaison simple ou un groupe de liaison divalent formé d'une chaîne conjuguée ; $X^{11}$ et $X^{12}$ représentent chacun un groupe thiocyanato, un groupe isothiocyanato, un groupe cyano, un groupe isonitrile, ou un atome d'halogène ; et $M^a$ représente un ion ou un cation hydrogène.

**8.** Colorant complexe de ruthénium selon la revendication 7,
dans lequel $L^1$ et $L^2$ sont chacun un groupe éthénylène ou un groupe éthynylène.

**9.** Colorant complexe de ruthénium selon l'une quelconque des revendications 1 à 8,
dans lequel la teneur en eau est de 0,5 % à 3,5 % en masse.

**10.** Colorant complexe de ruthénium selon la revendication 9,
dans lequel la teneur en eau est de 1,0 % à 3,0 % en masse.

**11.** Colorant complexe de ruthénium selon la revendication 10,
dans lequel la teneur en eau est de 1,5 % à 2,5 % en masse.

**12.** Colorant complexe de ruthénium selon l'une quelconque des revendications 1 à 11, utilisé comme un colorant de sensibilisation d'une cellule solaire à colorant.

**13.** Solution de colorant comprenant le colorant complexe de ruthénium selon l'une quelconque des revendications 1 à 12.

**14.** Élément de conversion photoélectrique comprenant :

un support électroconducteur ;
une couche de photoconducteur comprenant un électrolyte ;
une couche de transfert de charge comprenant un électrolyte ; et
une contre-électrode,
dans lequel la couche de photoconducteur possède des particules fines de semiconducteur portant le colorant complexe de ruthénium selon l'une quelconque des revendications 1 à 11.

**15.** Cellule solaire à colorant comprenant l'élément de conversion photoélectrique selon la revendication 14.

FIG. 1

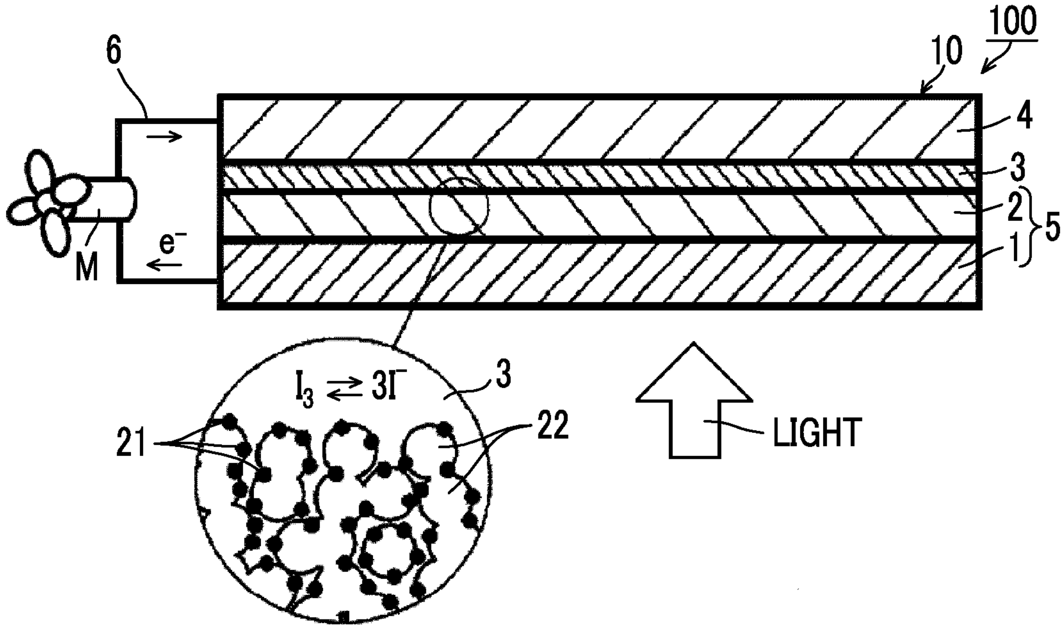
100
10
6
4
3
2
5
1
M
e⁻
$I_3 \rightleftarrows 3I^-$
21
22
LIGHT

FIG. 2

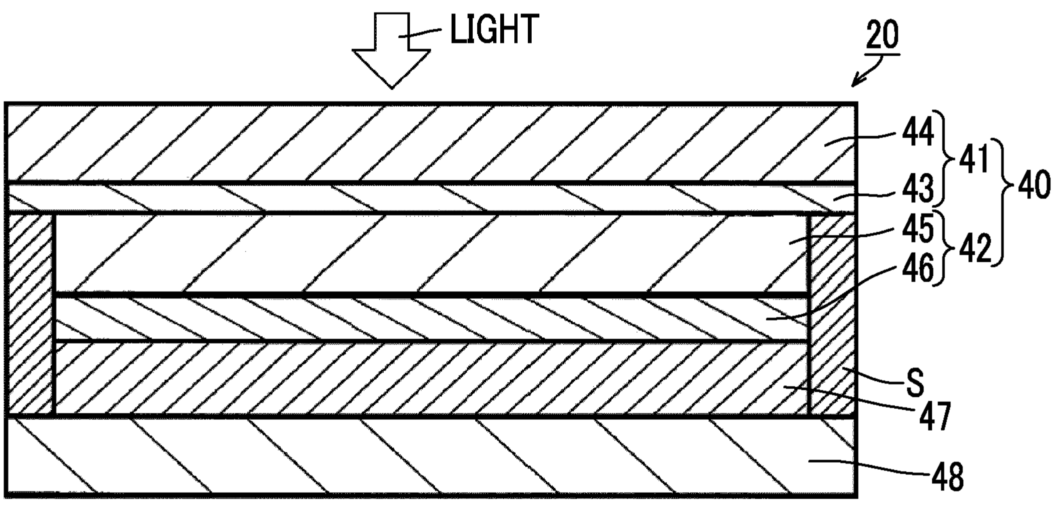
LIGHT
20
44
41
40
43
45
42
46
S
47
48

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012207209 A
- JP 2014209589 A
- WO 2014025040 A
- EP 1985669 A1
- JP 2013072080 A
- JP 2013084594 A
- JP 2008507570 A
- WO 2009020098 A
- US 20120111410 A
- JP 2009200028 A
- JP 2014209588 A
- JP 2007302879 A
- WO 2007091525 A
- JP 4298799 B
- JP 2001291534 A
- US 20130018189 A1
- US 20120073660 A1
- US 20120111410 A1
- US 20100258175 A1
- US 4927721 A
- US 4684537 A
- US 5084365 A
- US 5350644 A
- US 5463057 A
- US 5525440 A
- JP 7249790 A
- JP H07249790 A
- JP 2001185244 A
- JP 2001210390 A
- JP 2003217688 A
- JP 2004220974 A
- JP 2008135197 A
- JP 2005135902 A
- JP 2001160425 A
- JP 2003123859 A
- JP 2002260746 A
- JP 2014082187 A
- JP 2002289274 A
- JP 2014082189 A
- JP 2014139931 A
- JP 2014209578 A
- JP 2013133294 A
- WO 2013047384 A
- JP 2015054036 A
- JP 2015118147 A

### Non-patent literature cited in the description

- *Journal of Materials Chemistry A,* 2014, vol. 2, 17618-17627
- *Journal of the American Chemical Society,* 2001, vol. 123, 1613-1624
- *Inorganic Chemistry,* 1999, vol. 38, 6298-6305
- *Inorganic Chemistry,* 2004, vol. 43, 4216-4226
- *Journal of the American Chemical Society,* 2008, vol. 130, 10720-10728
- *ACS nano,* 2009, vol. 3, 3103-3109
- *Journal of the Physical Chemistry C,* 2009, vol. 113, 6290-6297
- *Angew. Chem. Int. Ed.,* 2011, vol. 50, 2054-2058
- *Chem. Commun.,* 2014, vol. 50, 6379-6381
- *Chemical Communications,* 2009, 5844-5846
- *Nature,* 2012, vol. 486, 487
- *Journal of Materials Chemistry A,* 2014, vol. 2, 17618-17627
- *Journal of the American Chemical Society,* 2001, vol. 123, 1613-1624
- *Inorganic Chemistry,* 2004, vol. 43, 4216-4226
- *Journal of the American Chemical Society,* 2008, vol. 130, 10720-10728
- *ACS nano,* 2009, vol. 3, 3103-3109
- *Journal of the Physical Chemistry C,* 2009, vol. 113, 6290-6297